# EUROPEAN PATENT APPLICATION

(11) **EP 4 763 631 A1**
(43) Date of publication of application: **24.06.2026**
(21) Application number: 24854117.9
(22) Date of filing: 26.07.2024
(51) Int. Cl.: B60R 21/207, B60R 21/231, B60R 21/237

(54) **SEAT-ATTACHED AIRBAG DEVICE AND METHOD FOR FOLDING AIRBAG**

(30) Priority: 14.08.2023 JP 2023132161
(71) Applicant: TOYOTA JIDOSHA KABUSHIKI KAISHA, Toyota-Shi, Aichi-Ken 471-8571 (JP)
(72) Inventor: IWAMA, Toshiki, Toyota-shi, Aichi 471-8571 (JP); OHNO, Mitsuyoshi, Toyota-shi, Aichi 471-8571 (JP); SUZUKI, Yu, Toyota-shi, Aichi 471-8571 (JP); HASHIDO, Tatsuya, Toyota-shi, Aichi 471-8571 (JP)
(74) Representative: Cabinet Beau de Loménie
(86) International application number: PCT/JP2024/026835
(87) International publication number: WO 2025/037526

(57) **Abstract**

A seat-mounted airbag device including an airbag that includes a pair of front-rear chambers that, by being supplied with gas ejected from an inflator during a vehicle collision, are expanded and deployed to a seat front side by passing both left and right sides of a head of a passenger, and an airbag body that moves to a front side by passing between the head of the passenger and a ceiling in conjunction with expansion and deployment of the pair of front-rear chambers, and by being supplied with the gas from the pair of front-rear chambers, expands and deploys toward a rear side between the pair of front-rear chambers so as to be disposed at the front side of the passenger. The airbag includes a push structure that is provided at the rear side of the airbag body and that pushes the airbag body toward the seat front side.

## Description

### Technical Field

The present disclosure relates to a seat-mounted airbag device and to an airbag fold-packing method.

### Background Art

For example, as disclosed in Japanese Patent Application Laid-Open (JP-A) No. 2019-218013, a hitherto known airbag device includes an airbag provided with a rear expansion section that deploys at a back face side of a seat, a pair of side expansion sections that extend forward from both left and right sides of the rear expansion section, and a pair of front expansion sections that extend toward a center from the side expansion sections so as to be coupled together at the center and to cover in front of a passenger.

Moreover, for example as disclosed in JP-A No. 2019-018593, a hitherto known airbag device includes a bag body including a trunk support section that deploys from a rear of a head of a passenger to in front of the passenger, and a pair of head support sections that are connected to the trunk support section and deploy to the left and right sides of the head of the passenger. The bag body is formed with an escape section that, in a deployed state, passes between the pair of head support sections in the height direction, avoiding the head of the passenger.

### SUMMARY OF INVENTION

### Technical Problem

In such airbag devices as described above, the airbag body is arranged at a front side of the passenger by expanding and deploying from a seatback while passing through a gap between the head of the passenger and a ceiling. This means that the airbag body needs to remain small without gas being inflowed therein while passing over the head of the passenger, and needs to be expanded by inflowing gas therein after completely passed over the head of the passenger.

However, in cases in which gas is inflowed and the airbag body expanded after completely passed over the head of the passenger, there is a tendency to take a long duration until expansion and deployment of the airbag body is completed. There is accordingly room for improvement from the perspective both of improving deployment performance of an airbag body with respect to a gap between a head of a passenger and a ceiling, and of also achieving earlier completion for expansion and deployment of the airbag body.

The present disclosure accordingly obtains a seat-mounted airbag device and an airbag fold-packing method thereof that are configured to achieve both an improvement in deployment performance and earlier completion of expansion and deployment for an airbag body expanded and deployed by passing between a head of a passenger and a ceiling of a vehicle cabin so as to be arranged at a seat front side of a passenger.

### Solution to Problem

A seat-mounted airbag device of a first aspect of the present disclosure includes an inflator that is provided at a vehicle seat and that ejects gas during a vehicle collision, and an airbag. The airbag includes a pair of front-rear chambers that by being supplied with gas ejected from the inflator are expanded and deployed to a seat front side by passing both left and right sides of a head of a passenger seated in the vehicle seat, and an airbag body that moves to the seat front side by passing between the head of the passenger and a ceiling of a vehicle cabin in conjunction with expansion and deployment of the pair of front-rear chambers, and by being supplied with the gas from the pair of front-rear chambers, expands and deploys toward a seat rear side between the pair of front-rear chambers so as to be disposed at the seat front side of the passenger. The airbag also includes a push structure that is provided at the seat rear side of the airbag body and that pushes the airbag body toward the seat front side.

In the first aspect, gas ejected from the inflator during a vehicle collision is supplied to the pair of front-rear chambers, and the pair of front-rear chambers are expanded and deployed to the seat front side through both the left and right sides of the head of the passenger seated on the vehicle seat. The airbag body moves to the seat front side by passing between the head of the passenger seated in the vehicle seat and the vehicle cabin ceiling in conjunction with expansion and deployment of the pair of front-rear chambers, and by being supplied with the gas from the pair of front-rear chambers, expands and deploys toward the seat rear side between the pair of front-rear chambers so as to be disposed at the seat front side of the passenger. Namely, the airbag body is able to reliably move between the head of the passenger and the vehicle cabin ceiling due to expanding and deploying with a delay with respect to the pair of front-rear chambers.

Moreover, the airbag includes the push structure that is provided at the seat rear side of the airbag body and that pushes the airbag body toward the seat front side. This means that the airbag body is forcibly pushed from an initial-stage position (installation position) to the seat front side by the push structure. This means that a time that the airbag body remains in the initial-stage position during a vehicle collision is shortened, and earlier completion of expansion and deployment of the airbag body can be achieved.

Namely, the present disclosure both achieves an improvement in deployment performance and achieves earlier completion for expansion and deployment for an airbag body expanded and deployed by passing between a head of a passenger and a ceiling of a vehicle cabin so as to be arranged at a seat front side of a passenger. Note that reference here to "during a vehicle collision" also encompasses when the inevitability of a collision is foreseen (predicted).

Moreover, a seat-mounted airbag device of a second aspect of the present disclosure is the seat-mounted airbag device of the first aspect, wherein the push structure is configured by a push chamber that couples the pair of front-rear chambers together.

In the second aspect the push structure is configured by the push chamber that couples the pair of front-rear chambers together. This means that the airbag body is reliably pushed by the push chamber from the initial-stage position (installation position) to the seat front side.

Moreover, the seat-mounted airbag device of the third aspect of the present disclosure is the seat-mounted airbag device of the first aspect, wherein the push structure is configured by a push chamber that is a separate body from the pair of front-rear chambers.

In the third aspect, the push structure is configured by the push chamber that is a separate body from the pair of front-rear chambers. This means that the airbag body is reliably pushed by the push chamber from the initial-stage position (installation position) to the seat front side. Moreover, the push chamber is configured as a separate body from the pair of front-rear chambers, and so the configuration of the airbag is simplified.

A seat-mounted airbag device of a fourth aspect of the present disclosure is the seat-mounted airbag device of the first aspect, wherein the push structure is configured by a push cloth that couples the pair of front-rear chambers together.

In the fourth aspect, the push structure is configured by the push cloth that couples the pair of front-rear chambers together. This means that tension is imparted to the push cloth in the seat width direction when the pair of front-rear chambers move to the seat front side. The airbag body is accordingly reliably pushed from the initial-stage position (installation position) to the seat front side by the push cloth. Moreover, due to the push structure being configured by the push cloth, the airbag is able to be housed compactly as well as being lighter in weight.

A seat-mounted airbag device of a fifth aspect of the present disclosure is the seat-mounted airbag device of the second or third aspect, wherein the inflator is provided as a single inflator, and distribution piping is provided at the vehicle seat to enable gas ejected from the inflator to be respectively supplied to the pair of front-rear chambers and the push chamber, and an inner diameter of ejection ports of the distribution piping connected to basal portions of the pair of front-rear chambers is larger than an inner diameter of an ejection port of the distribution piping connected to a basal portion of the push chamber.

In the fifth aspect, the inflator is provided as a single inflator, and gas ejected from the inflator is respectively supplied to the pair of front-rear chambers and the push chamber by the distribution piping. This reduces the number of components and the installation space compared to cases in which the inflator is configured by one or two inflators provided for the pair of front-rear chambers and one inflator provided for the push chamber, thereby enabling a reduction in the manufacturing cost to be achieved.

Moreover, the inner diameter of the ejection ports of the distribution piping connected to the basal portions of the pair of front-rear chambers is larger than the inner diameter of the ejection port of the distribution piping connected to the basal portion of the push chamber. This means that the supply quantity of gas to the pair of front-rear chambers is increased to more than the supply quantity of gas to the push chamber, and an earlier completion of expansion and deployment of the airbag body is achieved.

A seat-mounted airbag device of a sixth aspect of the present disclosure is the seat-mounted airbag device of the fifth aspect, wherein a headrest of the vehicle seat is integrally formed with a seatback of the vehicle seat, and the inflator is disposed along an extension direction of the seatback.

In the sixth aspect, the headrest is integrally formed with the seatback. This means that the airbag is prevented from coming away from the vehicle seat better than when the headrest is configured as a separate body from the seatback. Moreover, the inflator is arranged along an extension direction of the seatback. This means that the headrest and the seatback are suppressed from becoming bulky (being increased in thickness) compared to cases in which the inflator is disposed along a direction intersecting with the extension direction of the seatback.

A seat-mounted airbag device of a seventh aspect of the present disclosure is the seat-mounted airbag device of the second or third aspect, wherein the inflator is configured by two inflators, comprising a first inflator that supplies gas to the pair of front-rear chambers and a second inflator that supplies gas to the push chamber, the vehicle seat is provided with a first distribution piping configured to supply gas ejected from the first inflator to the pair of front-rear chambers, and a second distribution piping configured to supply gas ejected from the second inflator to the push chamber, and an inner diameter of an ejection port of the first distribution piping connected to a basal portion of the pair of front-rear chambers is larger than an inner diameter of an ejection port of the second distribution piping connected to a basal portion of the push chamber.

In the seventh aspect, the inflator is configured by the two inflators, the first inflator that supplies gas to the pair of front-rear chambers and the second inflator that supplies gas to the push chamber, and gas ejected from the first inflator is supplied to the pair of front-rear chambers by the first distribution piping, and gas ejected from the second inflator is supplied to the push chamber by the second distribution piping. This means that the number of components and the installation space is reduced compared to cases in which the inflator is configured by two inflators provided for the pair of front-rear chambers and one inflator provided for the push chamber, thereby enabling a reduction in the manufacturing cost to be achieved.

Moreover, the inner diameter of the ejection port of the first distribution piping connected to the basal portion of the pair of front-rear chambers is larger than the inner diameter of the ejection port of the second distribution piping connected to the basal portion of the push chamber. This means that the supply quantity of gas to the pair of front-rear chambers is increased to more than the supply quantity of gas to the push chamber, and an earlier completion of expansion and deployment of the airbag body is achieved.

A seat-mounted airbag device of an eighth aspect of the present disclosure is the seat-mounted airbag device of the seventh aspect, wherein the headrest of the vehicle seat is integrally formed with a seatback of the vehicle seat, and the first inflator and the second inflator are arranged along an extension direction of the seatback.

In the eighth aspect, the headrest is integrally formed with the seatback. This means that the airbag is prevented from coming away from the vehicle seat better than when the headrest is configured as a separate body from the seatback. Moreover, the first inflator and the second inflator are arranged along an extension direction of the seatback. This means that the headrest and the seatback are suppressed from becoming bulky (being increased in thickness) compared to cases in which the first inflator and the second inflator are disposed along a direction intersecting with the extension direction of the seatback.

A seat-mounted airbag device of a ninth aspect of the present disclosure is the seat-mounted airbag device of the second or third aspect, wherein the inflator is configured by three inflators that enable gas to be supplied to each of the pair of front-rear chambers and the push chamber, and outputs of two of the three inflators respectively supplying gas to the pair of front-rear chambers are higher than an output of one of the three inflators supplying gas to the push chamber.

In the ninth aspect, the inflator is configured by three inflators provided so as to enable gas to be supplied to each of the pair of front-rear chambers and the push chamber, and the output of the two inflators respectively supplying gas to the pair of front-rear chambers are higher than an output of one of the three inflators supplying gas to the push chamber. This means that the supply quantity of gas to the pair of front-rear chambers is increased to more than the supply quantity of gas to the push chamber, and an earlier completion of expansion and deployment of the airbag body is achieved.

A seat-mounted airbag device according to a tenth aspect of the present disclosure is the seat-mounted airbag device of any one of the first to the ninth aspects, wherein a valve mechanism is provided at a leading end portion of each of the pair of front-rear chambers to prevent instantaneous inflow of the gas.

In the tenth aspect, the valve mechanism is provided at the leading end portion of each of the pair of front-rear chambers to prevent instantaneous inflow of the gas. This thereby enables control to be performed such that gas does not inflow to the airbag body until moved to the seat front side by passing between the head of the passenger and the vehicle cabin ceiling. The airbag body accordingly reliably moves to the seat front side, and an earlier completion of expansion and deployment of the airbag body is achieved effectively.

An airbag fold-packing method of an eleventh aspect of the present disclosure is a fold-packing method for an airbag configured by a pair of front-rear chambers that, by being supplied with gas ejected from an inflator provided at a vehicle seat during a vehicle collision, are expanded and deployed to a seat front side by passing both left and right sides of a head of a passenger seated in the vehicle seat, and with an airbag body that moves to the seat front side by passing between the head of the passenger and a ceiling of a vehicle cabin in conjunction with expansion and deployment of the pair of front-rear chambers, and by being supplied with the gas from the pair of front-rear chambers, expands and deploys toward a seat rear side between the pair of front-rear chambers so as to be disposed at the seat front side of the passenger. The airbag fold-packing method includes providing the airbag, which is configured from a base cloth in a flattened shape, and pulling a part of the base cloth toward an outer side of the airbag in a seat width direction.

In the eleventh aspect, when fold-packing the airbag, the airbag is provided in the flattened shape and part of the base cloth is pulled to outer side in the seat width direction. This means that the thickness arising from superimposing base cloths of the airbag is reduced, and the thickness of the airbag body is reduced, thereby improving deployment performance of the airbag moving to the seat front side by passing between the head of the passenger and the vehicle cabin ceiling. Namely, the airbag can reliably move to the seat front side, and so an earlier completion of expansion and deployment of the airbag body is achieved effectively.

An airbag fold-packing method of a twelfth aspect according to the present disclosure is the airbag fold-packing method of the eleventh aspect, including a roll-pack process in which leading end portions of the pair of front-rear chambers are roll-packed a specific number of times from a seat front side toward a seat upper side, and a concertina folding process in which the pair of front-rear chambers are concertina folded plural times except for at the leading end portions.

In the twelfth aspect, the leading end portions of the pair of front-rear chambers are roll-packed a specific number of times from a seat front side toward a seat upper side, and the pair of front-rear chambers are concertina folded plural times except for at the leading end portions.

Concertina folding is known to achieve faster deployment than roll-packing. This means that except at the leading end portions, the pair of front-rear chambers are expanded and deployed earlier. Control is performed such that the leading end portions of the pair of front-rear chambers do not expand and deploy until the airbag body has moved to the seat front side by passing between the head of the passenger and the vehicle cabin ceiling. The airbag body can accordingly reliably move to the seat front side, enabling an earlier completion of expansion and deployment of the airbag body to be achieved effectively.

An airbag fold-packing method of a thirteenth aspect of the present disclosure is the airbag fold-packing method of the twelfth aspect, wherein the number of times of roll-packing is one.

In the thirteenth aspect, the number of times of roll-packing at the leading end portions of the pair of front-rear chambers is one. When the number of times of roll-packing is, for example, 0.5 times, then gas starts to flow into the airbag body prior to the airbag body moving to the seat front side by passing between the head of the passenger and the ceiling of the vehicle cabin, with this making it difficult for the airbag body to move to the seat front side by passing between the head of the passenger and the vehicle cabin ceiling. When the number of times of roll-packing is, for example, 1.5 times, then in the airbag body after moving to the seat front side, inflow of gas into the airbag body from the leading end portions of the pair of front-rear chambers is delayed, and expansion and deployment of the airbag body to the seat rear side is accordingly delayed.

In contrast thereto, when the number of times of roll-packing is 1 time, then inflow of gas to the airbag body does not start before the airbag body has moved to the seat front side by passing between the head of the passenger and the vehicle cabin ceiling, and the airbag body easily moves to the seat front side by passing between the head of the passenger and the vehicle cabin ceiling. Moreover, in the airbag body after moving to the seat front side, due to inflow of gas to the airbag body from the leading end portions of the pair of front-rear chambers being faster, the expansion and deployment of the airbag body to the seat rear side is faster. An earlier completion of expansion and deployment of the airbag body is achieved thereby.

Moreover, an airbag fold-packing method of a fourteenth aspect of the present disclosure is the airbag fold-packing method of the twelfth or thirteenth aspect, wherein the number of times of concertina folding is three.

In the fourteenth aspect of the present disclosure, the number of times of concertina folding of the pair of front-rear chambers is three. This means that except for at the leading end portions, the pair of front-rear chambers are expanded and deployed earlier than cases in which the number of times of concertina folding is four or more times.

An airbag fold-packing method of a fifteenth aspect of the present disclosure is the airbag fold-packing method of the eleventh aspect, wherein pulling a part of the base cloth configuring the airbag to the outer side of the airbag in the seat width direction includes pulling the base cloth at both left and right side parts that have been tucked inside the airbag body to the outer side of the airbag body in the seat width direction.

In the fifteenth aspect, when fold-packing the airbag body, the airbag body is provided in a flattened shape, and the base cloth at both the left and right sides that have been tucked to inside of the airbag body is pulled to outer side of the airbag body in the seat width direction. The thickness arising from superimposing base cloths of the airbag body is accordingly reduced and the thickness of the airbag body is reduced, thereby improving deployment performance of the airbag body moving to the seat front side by passing between the head of the passenger and the vehicle cabin ceiling. Namely, due to the airbag body being able to reliably move to the seat front side, earlier completion of expansion and deployment of the airbag body is achieved effectively.

An airbag fold-packing method of a sixteenth aspect of the present disclosure is the airbag fold-packing method of the eleventh aspect, wherein pulling a part of the base cloth configuring the airbag to the outer side of the airbag in the seat width direction includes pulling substantially central portions, in a height direction, of a base cloth at both left and right sides of the front-rear chambers to an outer side of the front-rear chambers in the seat width direction.

In the sixteenth aspect, when fold-packing the front-rear chambers, the front-rear chambers are provided in the flattened shape, and the height direction substantially central portions of the base cloth at both the left and right sides of the front-rear chambers are pulled to an outer side of the front-rear chambers in the seat width direction. The thickness arising from superimposing base cloths of the front-rear chambers is reduced and the thickness of the front-rear chambers is reduced, and so fold-packing is facilitated, and compact fold-packing can be achieved.

As described above, the present disclosure enables an improvement in deployment performance and an earlier completion of expansion and deployment to both be achieved for an airbag body that is disposed at the seat front side of a passenger by being expanded and deployed by passing between the head of the passenger and a ceiling of a vehicle cabin.

### BRIEF DESCRIPTION OF DRAWINGS

Exemplary embodiments will be described in detail based on the following figures, wherein:
Fig. 1 is a schematic perspective view illustrating an airbag of a seat-mounted airbag device according to a first exemplary embodiment in an expanded and deployed state;
Fig. 2 is a schematic side view illustrating an airbag of a seat-mounted airbag device according to the first exemplary embodiment in an expanded and deployed state;
Fig. 3 is a schematic plan view illustrating an airbag of a seat-mounted airbag device according to the first exemplary embodiment in an expanded and deployed state;
Fig. 4 is a schematic plan view illustrating a shape of an airbag of the first exemplary embodiment prior to being fold-packed;
Fig. 5A is an enlarged cross-section as viewed along line X-X of Fig. 4;
Fig. 5B is an enlarged cross-section as viewed along line Y-Y of Fig. 4;
Fig. 6A is a schematic plan view illustrating a process of fold-packing the airbag of the first exemplary embodiment;
Fig. 6B is a schematic plan view illustrating a process of fold-packing the airbag of the first exemplary embodiment;
Fig. 6C is a schematic plan view illustrating a process of fold-packing the airbag of the first exemplary embodiment;
Fig. 6D is a schematic plan view illustrating a process of fold-packing the airbag of the first exemplary embodiment;
Fig. 6E is a schematic plan view illustrating a process of fold-packing the airbag of the first exemplary embodiment;
Fig. 6F is a schematic plan view illustrating a process of fold-packing the airbag of the first exemplary embodiment;
Fig. 7 is a schematic face-on view illustrating a shape of the airbag of the first exemplary embodiment after fold-packing;
Fig. 8 is a schematic face-on view illustrating a partial cross-section of an airbag housed in a headrest of the first exemplary embodiment;
Fig. 9A is a schematic face-on view illustrating a shape of distribution piping in the first exemplary embodiment, in a partial cross-section in which an airbag is omitted;
Fig. 9B is a schematic side view illustrating a partial cross-section of an airbag housed in a headrest of the first exemplary embodiment;
Fig. 10A is a schematic plan view illustrating a process at an initial-stage of expansion and deployment of an airbag of the first exemplary embodiment;
Fig. 10B is a schematic plan view illustrating a process at an initial-stage of expansion and deployment of an airbag of the first exemplary embodiment;
Fig. 10C is a schematic plan view illustrating a process at an initial-stage of expansion and deployment of an airbag of the first exemplary embodiment;
Fig. 11 is a schematic side view illustrating a process at an initial-stage of expansion and deployment of an airbag of the first exemplary embodiment;
Fig. 12 is a schematic side view illustrating a process at an intermediate-stage of expansion and deployment of an airbag of the first exemplary embodiment;
Fig. 13 is a schematic side view illustrating a process at a later-stage of expansion and deployment of an airbag of the first exemplary embodiment;
Fig. 14A is a schematic plan view illustrating a process at an initial-stage of expansion and deployment of an airbag of the second exemplary embodiment;
Fig. 14B is a schematic plan view illustrating a process at an initial-stage of expansion and deployment of an airbag of the second exemplary embodiment;
Fig. 14C is a schematic plan view illustrating a process at an initial-stage of expansion and deployment of an airbag of the second exemplary embodiment;
Fig. 15A is a schematic face-on view illustrating a shape of distribution piping in a third exemplary embodiment, in a partial cross-section in which an airbag is omitted;
Fig. 15B is a schematic side view illustrating a partial cross-section of an airbag housed in a headrest of the third exemplary embodiment;
Fig. 16A is a schematic plan view illustrating a process at an initial-stage of expansion and deployment of an airbag of a fourth exemplary embodiment;
Fig. 16B is a schematic plan view illustrating a process at an initial-stage of expansion and deployment of an airbag of the fourth exemplary embodiment;
Fig. 16C is a schematic plan view illustrating a process at an initial-stage of expansion and deployment of an airbag of the fourth exemplary embodiment;
Fig. 17A is a schematic plan view illustrating a process at an initial-stage of expansion and deployment of an airbag of a fifth exemplary embodiment;
Fig. 17B is a schematic plan view illustrating a process at an initial-stage of expansion and deployment of an airbag of the fifth exemplary embodiment;
Fig. 17C is a schematic plan view illustrating a process at an initial-stage of expansion and deployment of an airbag of the fifth exemplary embodiment;
Fig. 18 is a schematic perspective view illustrating a valve mechanism in a sixth exemplary embodiment;
Fig. 19A is a schematic cross-section taken along line Z-Z of Fig. 18 and illustrating an operation of a valve mechanism of the sixth exemplary embodiment;
Fig. 19B is a schematic cross-section taken along line Z-Z of Fig. 18 and illustrating an operation of a valve mechanism of the sixth exemplary embodiment;
Fig. 19C is a schematic cross-section taken along line Z-Z of Fig. 18 and illustrating an operation of a valve mechanism of the sixth exemplary embodiment;
Fig. 20 is a schematic side view illustrating a valve mechanism of a seventh exemplary embodiment;
Fig. 21A is a schematic cross-section illustrating an operation of a valve mechanism of the seventh exemplary embodiment; and
Fig. 21B is a schematic cross-section illustrating an operation of a valve mechanism of the seventh exemplary embodiment.

### DESCRIPTION OF EMBODIMENTS

Detailed explanation follows regarding exemplary embodiments according to the present disclosure, with reference to the drawings. Note that for ease of explanation, as appropriate in the drawings an arrow UP indicates an upward direction of a vehicle and a vehicle seat, an arrow FR indicates a forward direction of a vehicle and a vehicle seat, an arrow RH indicates a right direction of a vehicle and a vehicle seat, and an arrow LH indicates a left direction of a vehicle and a vehicle seat. Thus, unless stated otherwise, in the following description references to up and down, front and rear, and left and right directions indicate up and down, front and rear, and left and right directions of a vehicle and a vehicle seat. Moreover, a left-right direction has the same definition as a vehicle width direction and a seat width direction.

### First Exemplary Embodiment

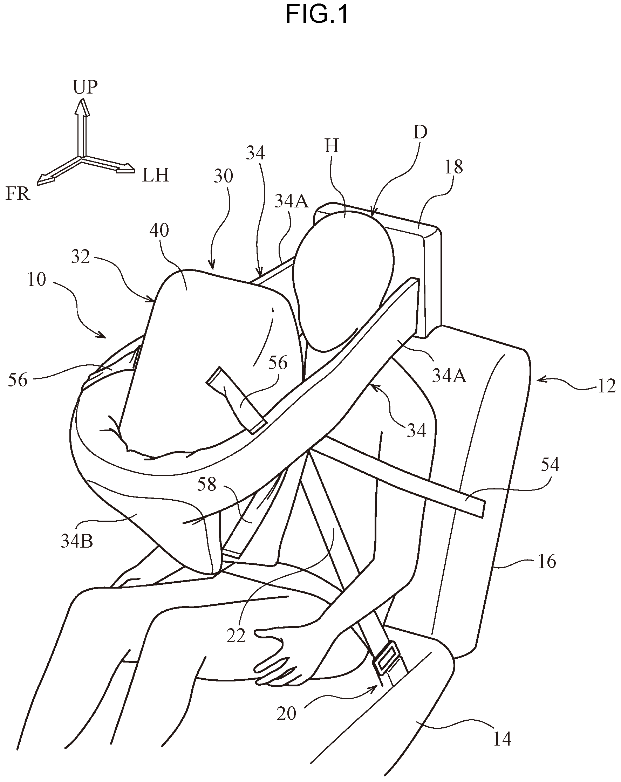

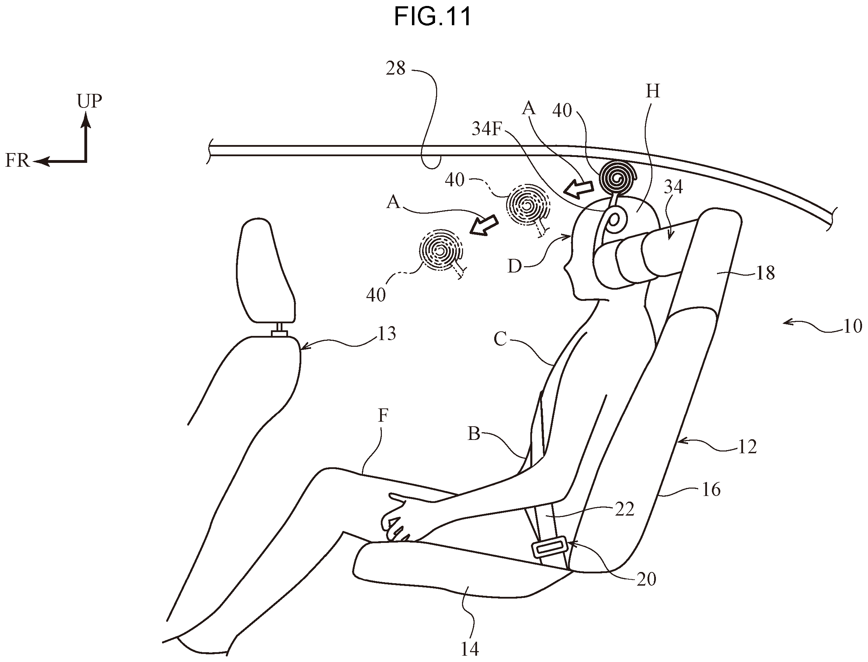

First, a seat-mounted airbag device (hereafter referred to simply as an "airbag device") 30 according to a first exemplary embodiment will be described. As illustrated in Fig. 1, a passenger protection device 10 is configured including a vehicle seat 12 and the airbag device 30. The vehicle seat 12 is a front seat or a rear seat of a vehicle (automobile). In this example the vehicle seat 12 is a rear seat and not a front seat 13 (see Fig. 11 to Fig. 13).

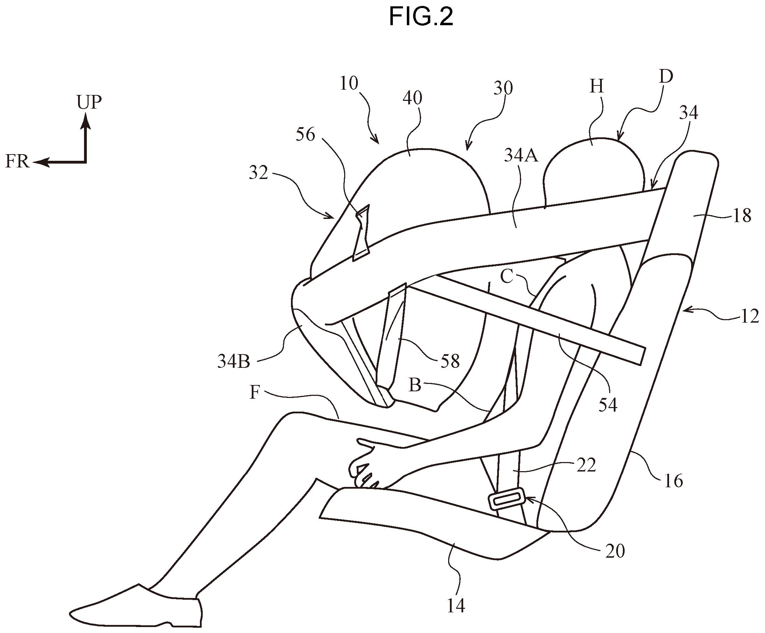

Note that a state is illustrated in Fig. 1 to Fig. 3 in which a crash test dummy (person dummy) is seated in the vehicle seat 12, as a model of a passenger (seated person) to be protected. The person dummy is, for example, an America male adult 50 percentile (AM50) head-on collision test dummy (Hybrid III). The person dummy is seated in a standard seated posture as determined by crash test method, and the vehicle seat 12 is positioned at a standard set position corresponding to the seated posture. For ease of explanation, the person dummy will hereafter be called "passenger D".

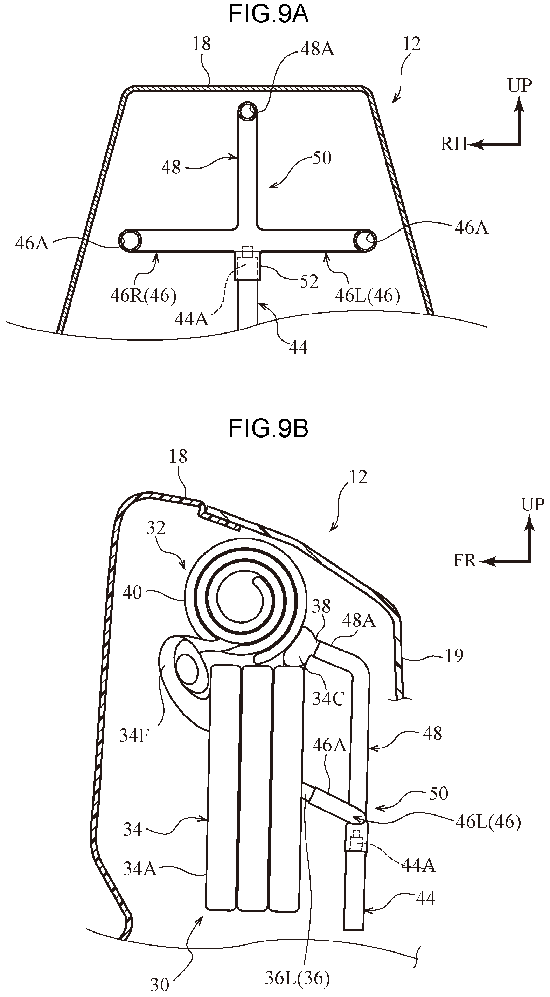

The vehicle seat 12 includes a seat cushion 14 for the passenger D to sit on (supporting the buttocks and thighs F of the passenger D), and a seatback 16 that is provided so as to extend upward at a rear side of the seat cushion 14 in side view when looking along the seat width direction and that is configured so as to be configured to swing about an axial direction along the seat width direction and supporting the back of the passenger D. The seatback 16 includes an integral headrest 18 that is provided at a seat width direction central portion of an upper end portion of the seatback 16 to support the head H of the passenger D. Note that a rear wall of the headrest 18 is configured by a backboard 19 (see Fig. 9B).

As illustrated in Fig. 1 to Fig. 3, the passenger D seated on the seat cushion 14 of the vehicle seat 12 is configured so as to be restrained in the vehicle seat 12 by a seatbelt 22 provided at a seatbelt device 20. The seatbelt device 20 is a three-point seatbelt device, and is a so-called seat-mounted seatbelt device in which a non-illustrated retractor and anchor, and a buckle, are each provided at the vehicle seat 12.

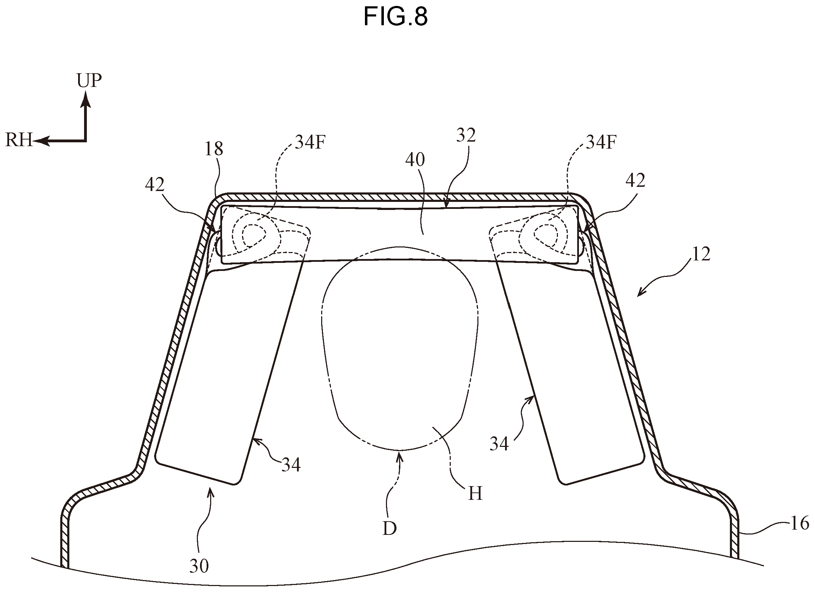

The airbag device 30 includes an airbag 32, and a single inflator 44 (see Fig. 9A and Fig. 9B). The airbag 32 is normally housed inside the headrest 18 in a fold-packed state (see Fig. 8, Fig. 9B, and Fig. 10A). The inflator 44 is, for example, either a combustion or cold gas type cylinder inflator formed in a substantially cylindrical shape, and is provided along an extension direction of the seatback 16 (with an axial direction facing along the height direction), either inside the seatback 16, or so as to straddle from inside the seatback 16 to inside the headrest 18.

The airbag device 30 includes a non-illustrated control device (ECU) for controlling actuation of the inflator 44. The control device is electrically connected to the inflator 44 and to non-illustrated collision sensors (including a camera or the like), and is configured so as to be configured to detect a head-on collision of a vehicle, or foreseeing the inevitability of a head-on collision. The control device is configured so as to actuate the inflator 44 when a vehicle head-on collision is detected or foreseen based on information from the collision sensors.

Namely, the inflator 44 is configured so as to generate gas and eject the gas from an ejection port 44A (see Fig. 9A and Fig. 9B) on being actuated by the control device when a vehicle head-on collision is detected or foreseen (hereafter referred to as "during a vehicle head-on collision"). Note that states of vehicle head-on collision when the control device actuates the inflator 44 include, in addition to a full head-on collision, offset head-on collisions such as an oblique collision or a small overlap collision or the like.

The airbag 32 is configured so as to be supplied with gas ejected from the inflator 44 and to be deployed and expanded from a front face of the headrest 18 to the front side via both left and right sides of a head H of the passenger D seated in the vehicle seat 12 and via the upper side of the head H of the passenger D. To explain more specifically, the airbag 32 includes a pair of front-rear chambers 34, and an airbag body 40.

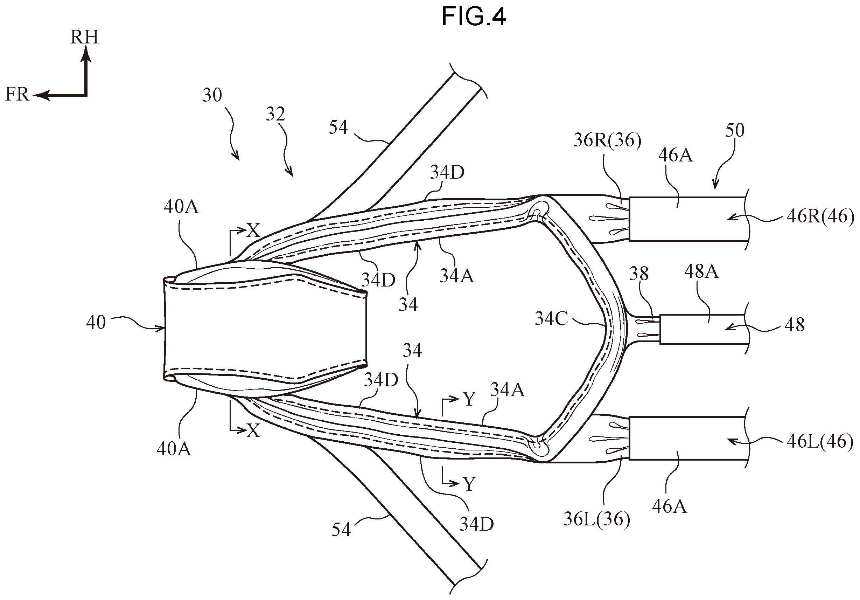

As illustrated in Fig. 4, the pair of front-rear chambers 34 includes a left-right pair of front-rear extension portions 34A that are expanded and deployed to the front side via the left and right sides of the head H of the passenger D so as to extend in the front-rear direction by being supplied with gas ejected from the inflator 44, a front coupling section 34B (see Fig. 1 to Fig. 3) that connects front end portions of the pair of front-rear extension portions 34A together in the left-right direction, and a rear coupling section 34C that connects rear end portions of the pair of front-rear extension portions 34A together in the left-right direction (so as to be coupled together). Note that the rear coupling section 34C serves as a "push chamber" and is arranged at a rear side of the airbag body 40.

The front coupling section 34B is connected to the pair of front-rear extension portions 34A so as to form a bag shape having a substantially T-shaped profile in front view (see Fig. 1 to Fig. 3). Cylindrical shaped basal portions 36 each extending rearward are integrally formed at the respective two seat width direction end portions of rear end portions of the pair of front-rear chambers 34 (the front-rear extension portions 34A), in other words at a rear face of the rear coupling section 34C, and a cylindrical shaped basal portion 38 extending rearward is also integrally formed at a seat width direction central portion of the rear face of the rear coupling section 34C.

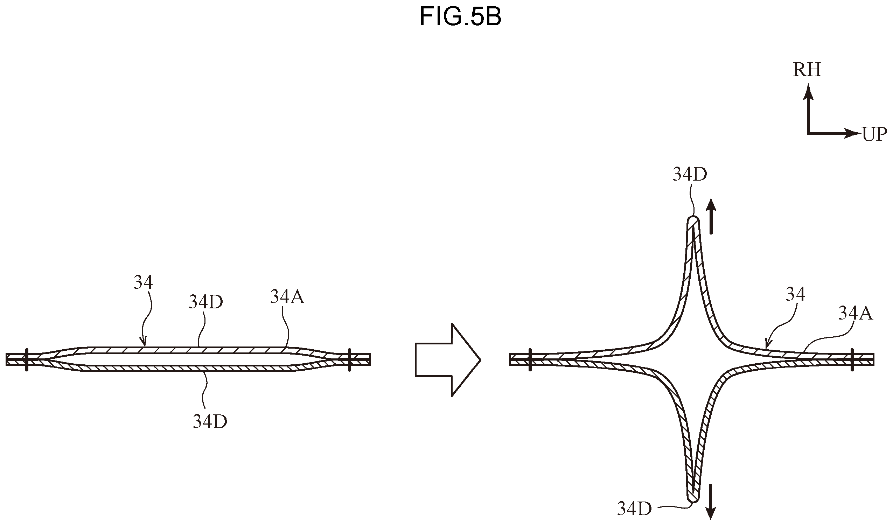

Note that in the following description the basal portion 36 on the left side is sometimes called the "basal portion 36L" and the basal portion 36 on the right side is sometimes called the "basal portion 36R". Ejection ports 46A, 48A of respective branch pipes of distribution piping (diffuser) 50, described later, are configured so as to be respectively connected to the left-right basal portions 36 and the central basal portion 38. Moreover, the front-rear chambers 34 are each formed in an elongated bag shape (tube shape) by superimposing two elongated strips of base cloth on each other and sewing upper and lower peripheral edge portions thereof together (see Fig. 5B).

The airbag body 40 is, by being supplied with gas from the pair of front-rear chambers 34 after having moved to the front side by passing between the head H of the passenger D and the ceiling 28 of the vehicle cabin (see Fig. 11 to Fig. 13) in conjunction with expansion and deployment of the pair of front-rear chambers 34 (the front-rear extension portions 34A), configured so as to be disposed at a rear side of the front coupling section 34B between the pair of front-rear chambers 34 (the front-rear extension portions 34A) and at the front side of the passenger D by being expanded and deployed toward the passenger D side (rearward) with a delay from the pair of front-rear chambers 34.

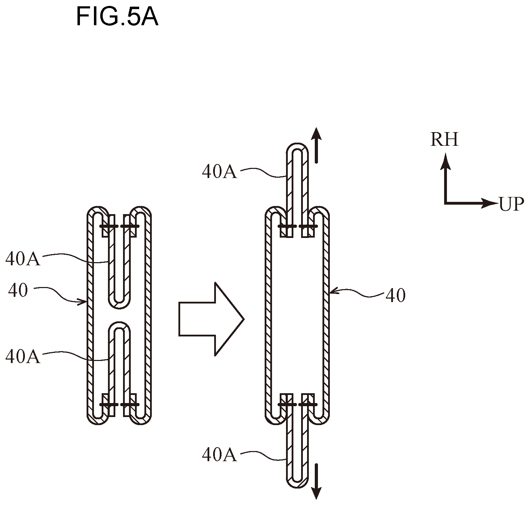

The airbag body 40 is formed in a bag shape by fold-packing a single piece of base cloth that has been cut out in a specific shape and sewing peripheral edge portions thereof together (see Fig. 5A). A periphery of a communication hole (omitted in the drawings) formed in a rear face of a left-right direction central portion of the base cloth configuring the front coupling section 34B of the front-rear chambers 34, and a periphery of a communication hole (omitted in the drawings) formed in the base cloth of the airbag body 40, are both connected together by being sewn. Note that the base cloth of the front-rear chambers 34 and the base cloth of the airbag body 40 are respectively configured from, for example, a polyamide- or polyester-based fabric.

Description follows regarding a fold-packing method of the airbag 32. As illustrated in Fig. 4 and Fig. 5A, first the airbag 32 is provided with the airbag body 40 and the front-rear chambers 34, which have been sewn from respective base cloths, in a flattened state (provision process). Next, prior to the airbag body 40 being fold-packed (wound) in a roll shape, left-right side base cloths 40A that are tucked to the inside of the airbag body 40 in the seat width direction are pulled out to the outer side of the airbag body 40 in the seat width direction and squashed substantially flat (airbag body 40 pull-out process). As illustrated in Fig. 4 and Fig. 5B, prior to the pair of front-rear chambers 34 being fold-packed in a concertina shape, an up-down direction substantially central portion of each of the respective base cloths 34D is pulled to outer side of the front-rear chambers 34 in the seat width direction and squashed substantially flat (front-rear chamber 34 pull-out process).

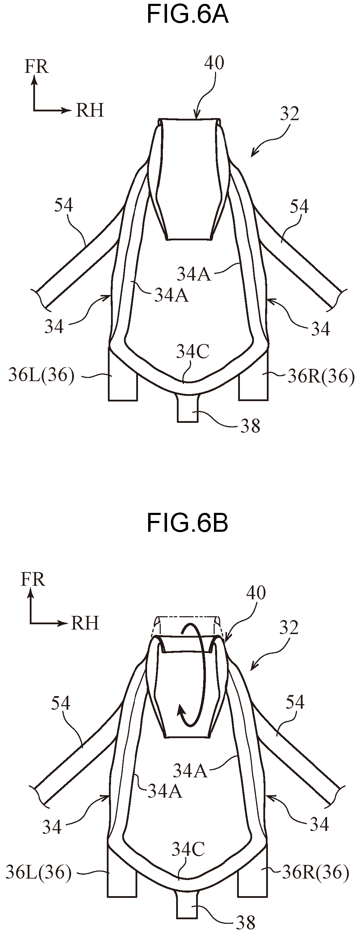

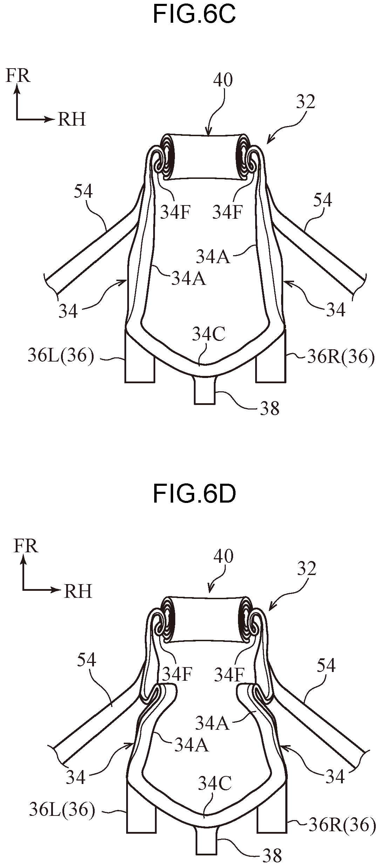

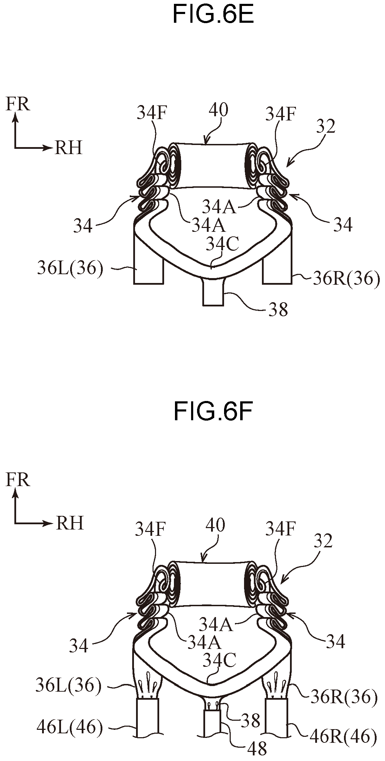

As illustrated in Fig. 6A to Fig. 6F, the airbag 32 is configured so as to be fold-packed in this state. First, as illustrated in Fig. 6A to Fig. 6C, the airbag body 40 is wound up in a roll shape from the front side toward the upper side. In other words, the airbag body 40 is fold-packed in a roll shape by external rolling so as to easily unravel under inertial force in conjunction with forward movement. The leading end portions 34F of the pair of front-rear chambers 34 (the front-rear extension portions 34A) are wound up in a roll shape one time from the front side toward the upper side (roll-packed by external rolling: roll-packing process).

Next, as illustrated in Fig. 6D to Fig. 6F, the pair of front-rear chambers 34 (the front-rear extension portions 34A), except for at leading end portions 34F that have been roll-packed, are fold-packed in a concertina shape (concertina folding process). Note that the concertina folding of the pair of front-rear chambers 34 (the front-rear extension portions 34A), except for at the leading end portions 34F, is concertina folding by forming three individual mountain portions. Namely, the number of times of concertina folding is three. Fig. 6F illustrates a connected state of respective branch pipes 46, 48 of the distribution piping 50, described later.

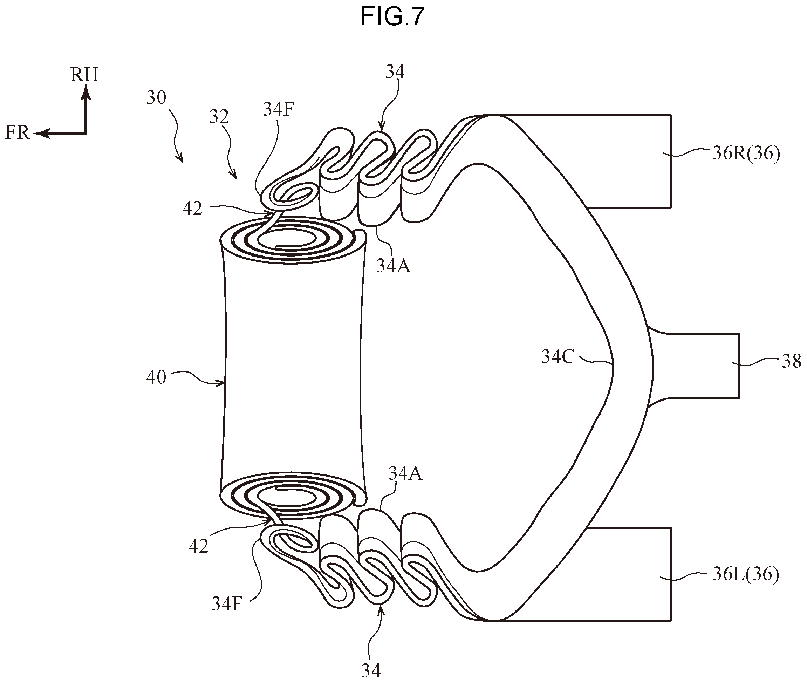

In such a fold-packed state as illustrated in Fig. 7, boundary portions 42 (see Fig. 7 and Fig. 8) between the airbag body 40 that has been fold-packed in a roll shape and the roll-packed leading end portions 34F of the pair of front-rear chambers 34 configure fold-line portions, such that the pair of front-rear chambers 34 are fold-bent downward.

The airbag 32 is then configured so as to be housed in this state inside the headrest 18, as illustrated in Fig. 8. Namely, the airbag 32 is configured so as to be disposed along an external profile (upper face and left and right side faces) of the headrest 18 when viewed from the front, with the position housed in this state configuring an initial-stage position (installation position) of the airbag 32.

Moreover, a non-illustrated tear line is formed in a front face of the headrest 18. This tear line is configured so as to rupture on receipt of expansion pressure of the airbag 32 during expansion and deployment of the airbag 32. The airbag 32 is thereby able to be expanded and deployed from the front face of the headrest 18 to the front side in a sequence of the pair of front-rear chambers 34 and then the airbag body 40.

Moreover, as illustrated in Fig. 9A, the resin or metal distribution piping 50 is disposed at a rear portion side of the inside of the headrest 18. The distribution piping 50 is branched in three directions, and includes cylindrical shaped branch pipes 46 respectively branching left and right from a seat width direction central portion thereof, and a cylindrical shaped branch pipe 48 branching upward from the seat width direction central portion thereof. Note that in the following description the branch pipe 46 branched toward the left from the seat width direction central portion of the distribution piping 50 is sometimes referred to as "branch pipe 46L", and the branch pipe 46 branched toward the right from the seat width direction central portion of the distribution piping 50 is sometimes referred to as "branch pipe 46R".

As illustrated in Fig. 9B, an ejection port 46A of the left branch pipe 46L and an ejection port 46A of the right branch pipe 46R extend with a specific length respectively forward and upward at a specific angle (for example at 20° to 30° with respect to the horizontal direction) in side view, and an ejection port 48A of the upper branch pipe 48 also extends with a specific length respectively forward and upward at a specific angle (for example at 20° to 30° with respect to the horizontal direction) in side view.

Note that the "specific length" of the ejection ports 46A and the ejection port 48A is preferably, for example, from 30 mm to 40 mm. This is because there is a concern that gas may not be ejected in the intended direction when the length of the ejection ports 46A and the ejection port 48A is shorter than 30 mm, and because there is a needless increase in the thickness of the headrest 18 when the length is longer than 40 mm.

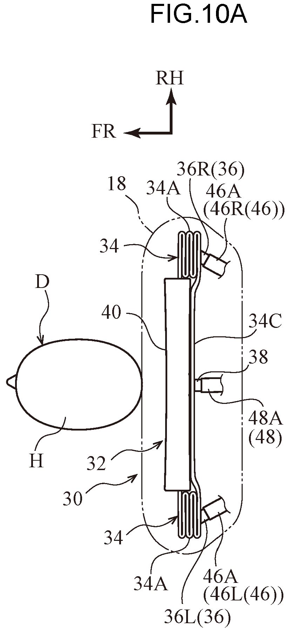

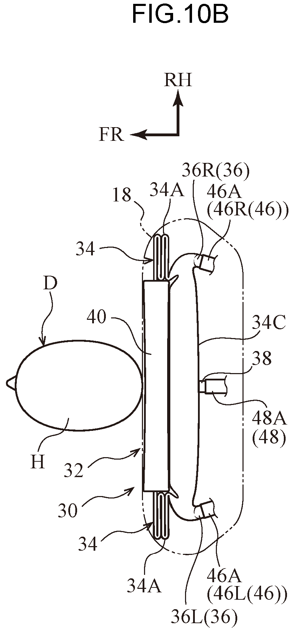

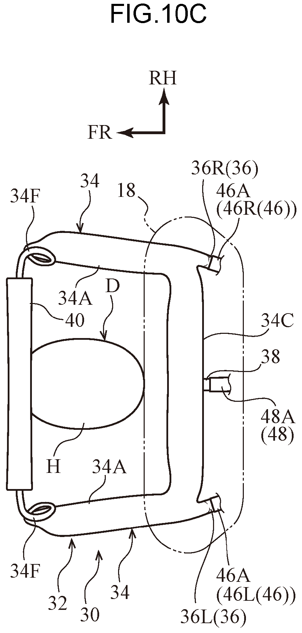

Moreover, as illustrated in Fig. 10, the ejection port 46A of the left branch pipe 46L and the ejection port 46A of the right branch pipe 46R also extend to outer side in the seat width direction and forward at a specific angle (for example at 10° to 20° with respect to the front-rear direction) in plan view. Thus, the pair of front-rear chambers 34 are expanded and deployed toward the seat width direction outside and forward, such that the roll-shaped airbag body 40 is configured to move from the rear side to the front side while being pulled to outer side in the seat width direction.

As illustrated in Fig. 4, Fig. 6F, and Fig. 10, the ejection port 46A of the left branch pipe 46L and the ejection port 46A of the right branch pipe 46R are respectively connected to the left basal portion 36L and the right basal portion 36R of the rear coupling section 34C, and the ejection port 48A of the upper branch pipe 48 is connected to the central basal portion 38 of the rear coupling section 34C. Note that as illustrated in Fig. 9B, for the airbag 32 in a state housed inside the headrest 18, the left and right basal portions 36L, 36R (only the left basal portion 36L is illustrated in Fig. 9B) are respectively positioned at a height direction substantially central portion at the rear side of the pair of front-rear chambers 34.

In other words, the ejection port 46A of the left branch pipe 46L and the ejection port 46A of the right branch pipe 46R (only the left branch pipe 46L is illustrated in Fig. 9B) are configured so as to be respectively positioned, in side view, at height direction substantially central portions at the rear side of the pair of front-rear chambers 34. Moreover. as illustrated in Fig. 9A, inner diameters of the ejection port 46A of the left branch pipe 46L and of the ejection port 46A of the right branch pipe 46R are the same as each other, and are formed larger (for example 1.2 times larger) than the inner diameter of the ejection port 48A of the upper branch pipe 48.

Moreover, the ejection port 44A of the inflator 44 is connected to a cylindrical shaped base 52 extending downward from a seat width direction central portion of the distribution piping 50. Namely, the inflator 44 is configured so as to eject gas to inside the left branch pipe 46L and the right branch pipe 46R of the distribution piping 50 configured to supply gas respectively toward the pair of front-rear chambers 34, and is also configured so as to eject gas to inside the upper branch pipe 48 of the distribution piping 50 configured to supply gas to the center of the rear coupling section 34C.

As illustrated in Fig. 10B and Fig. 10C, the airbag body 40 that has been fold-packed in a roll shape is configured so as to be pushed and moved forward by the expanded rear coupling section 34C. Namely, the airbag body 40 is configured so as not only to be moved forward from the initial-stage position by expansion and deployment of the pair of front-rear chambers 34, but so as to also be forcibly pushed forward by the expanded rear coupling section 34C. Thus in this manner the rear coupling section 34C functions as a push chamber that assists pushing of the airbag body 40 forward, so as to configure a push structure.

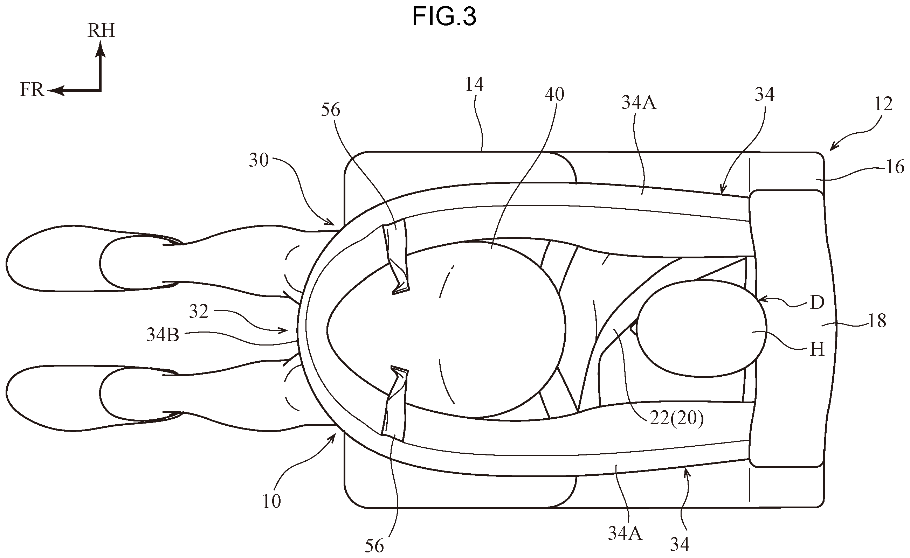

As illustrated in Fig. 1 to Fig. 3, in the airbag device 30 configured as described above, the front-rear extension portions 34A of the expanded and deployed pair of front-rear chambers 34 extend in the front-rear direction at the left and right sides of the head H of the passenger D, so as to oppose the head H from both the left and right sides thereof, separated from the head H by respective gaps. The front end portions of the expanded and deployed pair of front-rear extension portions 34A are in a state connected together in the left-right direction by the expanded and deployed front coupling section 34B. This means that the front-rear chambers 34 including the pair of front-rear extension portions 34A, and the front coupling section 34B projecting from the headrest 18, together configure a substantially U-shape open toward the rear in plan view (see Fig. 3).

Moreover, as illustrated in Fig. 11 to Fig. 13, the airbag body 40 is configured so as to be expanded and deployed toward the rear side (toward the passenger D side) by being supplied with gas from the front-rear chambers 34 after being moved to the front side along with the expansion and deployment of the pair of front-rear chambers 34. Namely, the airbag body 40 is configured so as to remain in a state fold-packed in the roll shape during the expansion and deployment of the pair of front-rear chambers 34, and so as to pass from the rear to the front side through the narrow gap between the head H of the passenger D and a ceiling 28 of the vehicle cabin (illustrated by virtual lines and arrow A in Fig. 11).

The airbag body 40 is configured so as to expand and deploy toward the passenger D side (rearward) at the rear side of the front coupling section 34B delayed with respect to the pair of front-rear chambers 34, with the expanded and deployed airbag body 40 configured so as to face toward the head H, the chest C, and the belly B of the passenger D, separated by a gap therefrom in the front-rear direction (see Fig. 1 to Fig. 3). Note that the airbag body 40 is set with a shape such that during expansion and deployment, the airbag body 40 is sandwiched between the thighs F and the chest C of the passenger D from an intermediate-stage to a later-stage during passenger restraint.

Moreover, as illustrated in Fig. 1 to Fig. 3, a left and right pair of rear tethers 54, a left and right pair of front-upper tethers 56, and a left-right pair of front-lower tethers 58 are attached to the airbag 32. The rear tethers 54, the front-upper tethers 56, and the front-lower tethers 58 are, for example, configured in elongated belt shapes from a polyamide- or polyester-based fabric. The fabric configuring the rear tethers 54, the front-upper tethers 56, and the front-lower tethers 58 is configured so as to be less extensible than the base cloth configuring the front-rear chamber 34. The extensibility is adjusted by the substance, thickness, and the like of the fabric.

The pair of front-upper tethers 56 are configured so as to couple wall faces at the left and right sides of a front side of an upper portion of the airbag body 40 expanded and deployed further upward than the front-rear chamber 34, to respective front portions of the pair of front-rear extension portions 34A. Namely, respective one-end portions of the pair of front-upper tethers 56 are sewn to wall faces of the left and right sides of the front side of the upper portion of the airbag body 40 expanded and deployed further upward than the front-rear chamber 34. Each of the other-end portions of the pair of front-upper tethers 56 is sewn to the respective front portion of the pair of front-rear extension portions 34A.

The pair of front-lower tethers 58 are configured so as to couple wall faces at the left and right sides of a front side of a lower portion of the airbag body 40 expanded and deployed further downward than the front-rear chamber 34, to respective front portions of the pair of front-rear extension portions 34A. Namely, each of the one-end portions of the pair of front-lower tethers 58 is sewn to the respective wall faces at the left and right sides of the lower portion of the airbag body 40 expanded and deployed further downward than the front-rear chamber 34. Each of the other-end portions of the pair of front-lower tethers 58 is sewn to the respective front portion of the pair of front-rear extension portions 34A.

Moreover, each of one-end portions of the pair of rear tethers 54 is attached by being sewn to a lower face of a front portion of the front-rear chambers 34 (the front-rear extension portions 34A) opposing a substantially central portion in side view of the expanded and deployed airbag body 40 in the seat width direction. Each of the other-end portions of the pair of rear tethers 54 is attached to a respective side portion of the seatback 16 (or to a non-illustrated vehicle body at a rear side of the passenger D). Thus the pair of rear tethers 54 extend obliquely rearward and downward at a lower side of the pair of front-rear extension portions 34A in an expanded and deployed state of the airbag 32.

Namely, the pair of rear tethers 54 adopt an inclined orientation facing obliquely rearward and downward in side view. This results in a configuration in which, during restraint of the passenger D by the airbag 32, the airbag body 40 is pulled (drawn) obliquely relatively rearward and downward by the pair of rear tethers 54, and the airbag body 40 and front portions of the pair of front-rear extension portions 34A are pulled obliquely relatively rearward and downward about a center of rotation of the headrest 18 in side view.

Action of the airbag device 30 and the fold-packing method of the airbag 32 according to the first exemplary embodiment configured as described above will next be described.

In the airbag 32 including the pair of front-rear chambers 34 and the airbag body 40, the pair of front-rear chambers 34 present at the two seat width direction end portions thereof are fold-bent downward along the external profile of the headrest 18 of the vehicle seat 12 when viewed from the front, and are housed in the headrest 18. Namely, the airbag 32 is housed compactly inside the headrest 18, with this housed position becoming the initial-stage position of the airbag 32.

Moreover, the headrest 18 housing the airbag 32 is integrally formed with the seatback 16. This thereby enables the airbag 32 (the airbag device 30) to be prevented from coming away from the vehicle seat 12 better than cases in which the headrest 18 is formed as a separate body from the seatback 16.

The inflator 44 is actuated under control of the control device when a vehicle head-on collision is detected (or foreseen) by the collision sensors. Namely, gas is generated and ejected from the inflator 44. The gas ejected from the inflator 44 is supplied through the distribution piping 50 into the pair of front-rear chambers 34 and the rear coupling section 34C of the airbag 32.

The inflator 44 is a single inflator disposed along the extension direction of the seatback 16 of the vehicle seat 12, and ejects gas into the distribution piping 50 configured to supply gas respectively to the pair of front-rear chambers 34 (the left and right basal portions 36L, 36R) and to the rear coupling section 34C (the central basal portion 38). Namely, gas ejected from the single inflator 44 arranged along the extension direction of the seatback 16 is respectively supplied by the distribution piping 50 to the pair of front-rear chambers 34 and the rear coupling section 34C.

This thereby enables the headrest 18 and the seatback 16 to be suppressed from becoming more bulky (from having an increased thickness) compared to cases in which there are ejection ports 44A of respective inflators 44 directly connected to the pair of front-rear chambers 34 (the left and right basal portions 36L, 36R) and the rear coupling section 34C (the central basal portion 38), namely cases in which there are three inflators 44 provided along directions that intersect with the extension direction of the seatback 16 in side view (projecting obliquely rearward and downward), and enables the number of components and the installation space to be reduced, thereby enabling a reduction in the manufacturing cost to be achieved.

Thus when gas is supplied to the pair of front-rear chambers 34, the tear line in the headrest 18 ruptures on receipt of expansion pressure of the pair of front-rear chambers 34, and as illustrated in Fig. 11, the pair of front-rear chambers 34 are expanded and deployed from the front face of the headrest 18 to the front side via the left and right sides of the head H of the passenger D.

When this occurs, each of the ejection ports 46A of the left and right branch pipes 46L, 46R connected to the left and right basal portions 36L, 36R of the pair of front-rear chambers 34 extend with a specific length at a specific angle toward the seat width direction outside and forward in plan view. This means that the pair of front-rear chambers 34 are also expanded and deployed in the intended direction toward the seat width direction outside and forward.

This means that even though the pair of front-rear chambers 34 of the airbag 32 housed in the headrest 18 are fold-bent downward with respect to the airbag body 40, the front-rear chambers 34 are deployed while unraveling such fold-bends during expansion and deployment. Thus the expansion and deployment performance of the pair of front-rear chambers 34 of the airbag 32 can be secured even when there is left-right direction variation in the position of the head H of the passenger D.

Moreover, when gas is supplied to the pair of front-rear chambers 34 as described above, gas is also supplied to the rear coupling section 34C. Namely, the rear coupling section 34C expands to the front side. When this occurs, the tear line of the headrest 18 receives expansion pressure of the rear coupling section 34C via the airbag body 40, namely receives pressing force of the expanded rear coupling section 34C pressing the airbag body 40 to the front side in a state fold-packed in a roll-shape, and accordingly ruptures.

The airbag body 40 that is being pushed to the front side by the expanded rear coupling section 34C moves to the front side via the upper side of the head H of the passenger D as the pair of front-rear chambers 34 are being expanded and deployed (see Fig. 11). Note that the pair of front-rear chambers 34 are expanded and deployed toward the seat width direction outside and forward when this occurs, and so the airbag body 40 moves to the front side while being pulled to outer side in the seat width direction.

Thus the airbag body 40 in the state fold-packed in a roll shape is forcibly pushed from the initial-stage position to the front side by the rear coupling section 34C serving as a push chamber, and the airbag body 40 also moves to the front side in conjunction with the expansion and deployment of the pair of front-rear chambers 34 while being pulled to outer side in the seat width direction by the pair of front-rear chambers 34. This accordingly shortens a time during a vehicle head-on collision when the airbag body 40 remains at the initial-stage position in the state fold-packed in a roll shape.

Moreover, the airbag 32 is provided in a flattened shape when fold-packed, and in the airbag body 40, the seat width direction outside base cloths 40A thereof are pulled to outer side in the seat width direction. This means that the thickness of the airbag 32 arising from superimposing base cloths can be reduced, and the thickness of the airbag body 40 can be reduced. This means that, when moving to the front side through the narrow gap between the head H of the passenger D and the ceiling 28 of the vehicle cabin, a malfunction in which the airbag body 40 becomes jammed in the narrow gap can be prevented from arising, enabling suppression or prevention of generation of deployment trouble with the airbag 32.

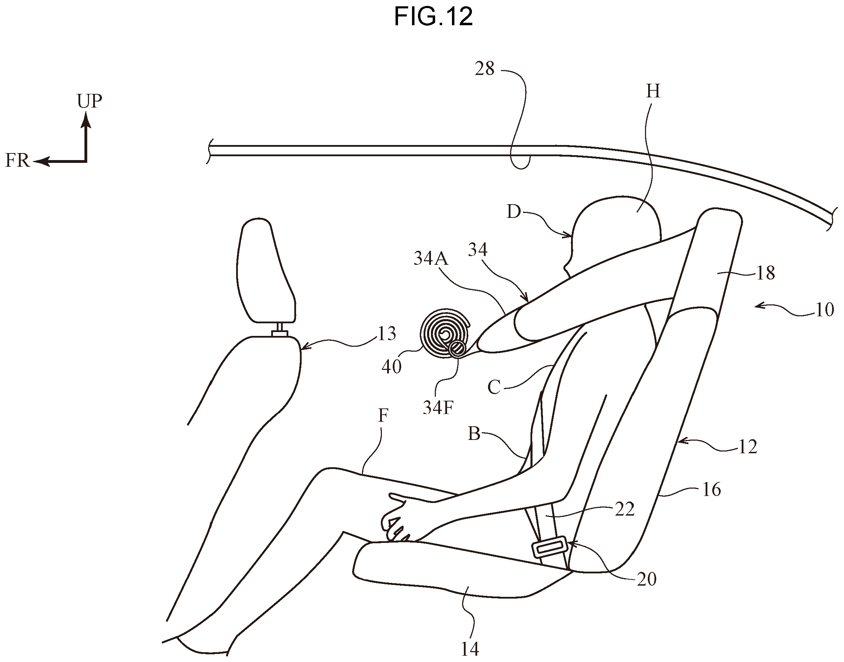

Thus when the pair of front-rear chambers 34 are expanded and deployed and the airbag body 40 is moved to the front side while in a state fold-packed in a roll shape, the head H of the passenger D is, relatively speaking, in a state inserted into a void section surrounded by the front-rear extension portions 34A of the pair of front-rear chambers 34 and by the airbag body 40 in a state fold-packed in a roll shape, as illustrated in Fig. 12.

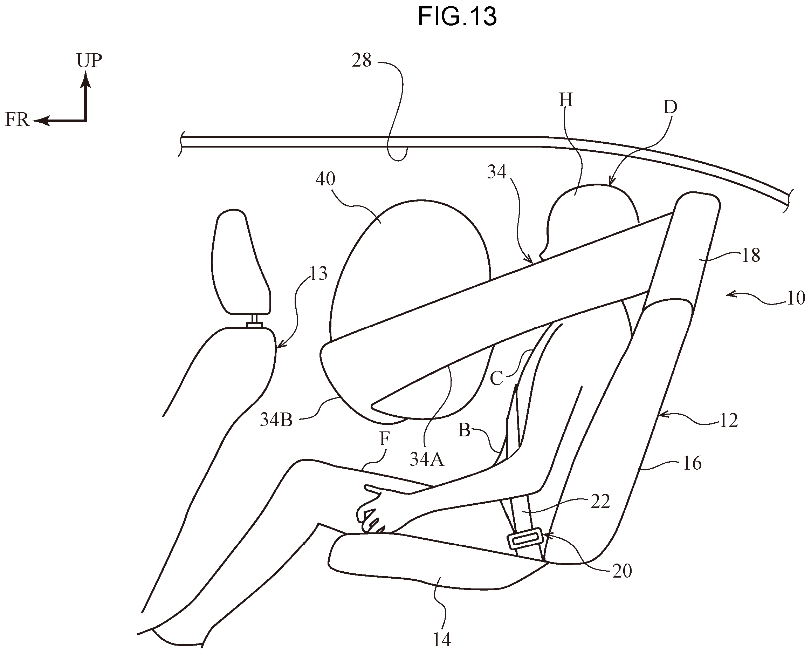

Then as illustrated in Fig. 13, the airbag body 40 is expanded and deployed toward the passenger D side by gas being supplied through the communication holes from the front coupling section 34B connecting the front end portions of the front-rear extension portions 34A of the pair of front-rear chambers 34 together in the left-right direction. Namely, the airbag body 40 is disposed between the pair of front-rear chambers 34 and at the front side of the passenger D.

Moreover, as described above, the gas from the inflator 44 is supplied to the airbag body 40 through the communication hole of the front coupling section 34B after the expansion and deployment of the pair of front-rear chambers 34 has been completed. Namely, the gas ejected from the inflator 44 that has flowed through the pair of front-rear extension portions 34A and the front coupling section 34B is supplied into the airbag body 40 through the communication holes, such that the airbag body 40 is expanded and deployed with a delay with respect to the pair of front-rear chambers 34.

Moreover, a height direction substantially central portion of each of the base cloths 34D of the pair of front-rear chambers 34 is pulled to outer side in the seat width direction and squashed by the pull-out process, and the leading end portions 34F of the pair of front-rear chambers 34 are roll-packed one time from the front side toward the upper side by the roll-pack process. The pair of front-rear chambers 34, except for at the leading end portions 34F, are concertina folded three times by the concertina folding process.

Concertina folding is known to achieve faster deployment that roll-packing. This means that when the number of times of concertina folding of the pair of front-rear chambers 34, except for at the leading end portions 34F, is three, the pair of front-rear chambers 34 are expanded and deployed at an earlier stage than when the number of times of concertina folding is four times or more. Due to the leading end portions 34F of the pair of front-rear chambers 34 being roll-packed one time, the airbag body 40 can be controlled so as not to expand and deploy until it has moved to the front side by passing between the head H of the passenger D and the ceiling 28 of the vehicle cabin.

A more specific explanation is that when the number of times of roll-packing of the leading end portions 34F of the pair of front-rear chambers 34 is, for example, 0.5 times, then gas starts to flow into the airbag body 40 prior to the airbag body 40 moving to the front side by passing between the head H of the passenger D and the ceiling 28 of the vehicle cabin, with this making it difficult for the airbag body 40 to move to the front side by passing between the head H of the passenger D and the ceiling 28 of the vehicle cabin. Moreover, when the number of times of this roll-packing is, for example, 1.5 times, then in the airbag body 40 after moving to the front side, inflow of gas into the airbag body 40 from the leading end portions 34F of the pair of front-rear chambers 34 is delayed, thereby delaying the expansion and deployment of the airbag body 40 to the rear side.

In contrast thereto, in the first exemplary embodiment, due to the number of times of roll-packing being one time, inflow of gas into the airbag body 40 does not start prior to the airbag body 40 moving to the front side through the gap between the head H of the passenger D and the ceiling 28 of the vehicle cabin, and so the airbag body 40 moves easily to the front side by passing between the head H of the passenger D and the ceiling 28 of the vehicle cabin. Moreover, the inflow of gas to the airbag body 40 from the leading end portions 34F of the pair of front-rear chambers 34 is fast in the airbag body 40 after having moved to the front side, and so expansion and deployment of the airbag body 40 to the rear side is also fast.

Namely, in the first exemplary embodiment, in conjunction with expansion and deployment of the pair of front-rear chambers 34, the airbag body 40 is able to reliably and at an early stage pass through (move) from the rear side to the front side through the narrow gap between the head H of the passenger D and the ceiling 28 of the vehicle cabin while being maintained a state fold-packed in a roll shape, and then after passing through, the airbag body 40 can be expanded and deployed quickly toward the passenger D, enabling the deployment performance to be improved. This means that an earlier completion of expansion and deployment can be achieved of the airbag body 40 installed in the initial-stage position in the state fold-packed in a roll shape.

Moreover, in the first exemplary embodiment, the inner diameter of each of the ejection ports 46A of the left and right branch pipes 46L, 46R connected to each of the basal portions 36L, 36R of the pair of front-rear chambers 34 is larger than the inner diameter of the ejection port 48A of the branch pipe 48 connected to the basal portion 38 of the rear coupling section 34C. This means that the supply quantity of gas supplied to the pair of front-rear chambers 34 can be increased to more than the supply quantity of gas supplied to the rear coupling section 34C, with this accordingly enabling an earlier completion of expansion and deployment of the airbag body 40 to be achieved.

This means that in the first exemplary embodiment, an improvement in deployment performance and an earlier completion of expansion and deployment can both be achieved for the airbag body 40 that is expanded and deployed by passing between the head H of the passenger D and the ceiling 28 of the vehicle cabin so as to be arranged at the front side of the passenger D. In particular, a pushing structure to assist pushing of the airbag body 40 is configured by the rear coupling section 34C serving as the push chamber coupling the pair of front-rear chambers 34 together, enabling the airbag body 40 to be reliably pushed to the front side from the initial-stage position by the rear coupling section 34C while in a state fold-packed in a roll shape.

Note that during expansion and deployment of the airbag body 40, the pair of front-upper tethers 56 respectively couple left-right side locations at the front side of an upper portion of the airbag body 40 to front portions of the pair of front-rear extension portions 34A. The pair of front-upper tethers 56 are able to suppress the airbag body 40 from displacing (rotating) upward about the front coupling section 34B with respect to the front-rear chamber 34 inadvertently when the airbag body 40 (the airbag 32) has been completely expanded and deployed.

Moreover, during expansion and deployment of the airbag body 40, the pair of front-lower tethers 58 couple locations at the left and right sides of a front side of the lower portion of the airbag body 40 to the front portions of the pair of front-rear extension portions 34A. The pair of front-lower tethers 58 are able to suppress the airbag body 40 from displacing (rotating) downward about the front coupling section 34B with respect to the front-rear chamber 34 inadvertently when the airbag body 40 (the airbag 32) has been completely expanded and deployed.

Moreover, the pair of rear tethers 54 also extends obliquely rearward and downward at a lower side of the pair of front-rear extension portions 34A when the airbag 32 has been completely expanded and deployed. Namely, the pair of rear tethers 54 limits the airbag body 40 from moving obliquely forward and upward. This accordingly enables the airbag 32 to be suppressed from swinging in the height direction and in the front-rear direction (enables a contribution to the stability of the deployment behavior of the airbag body 40).

In this state, the passenger D who has moved toward the front side under inertia from the impact of the vehicle head-on collision is restrained by the airbag body 40. More specifically, during restraint of the passenger D, the front-rear chambers 34 (the front-rear extension portions 34A) are stretched toward the front side by movement of the passenger D toward the front side. The airbag body 40 is then compression deformed toward the front side by being pressed toward the front side by the passenger D.

This accordingly enables the energy absorption performance of the airbag body 40 to be improved, and enables the passenger restraint performance of the airbag body 40 to be effectively secured. Namely, in cases in which both the front-rear chamber 34 and the airbag body 40 receive tensional load, the load from the airbag body 40 imparted to the passenger D increases, however the load imparted to the passenger D can be decreased somewhat by compression deformation of the airbag body 40.

Moreover, the airbag body 40 is set with a shape so as to be sandwiched between the thighs F and the chest C of the passenger D from an intermediate-stage to a later-stage during passenger restraint by the airbag 32, and so this enables contact with the upper body of the passenger D over a wide surface area. The load from the airbag body 40 imparted to the passenger D can accordingly be reduced significantly.

The airbag body 40 is also expanded and deployed toward the passenger D side at the rear side of the front coupling section 34B after the expansion and deployment of the front-rear chamber 34, and so a gap between the airbag body 40 and the passenger D becomes small. The passenger D is thereby restrained at an early-stage by the airbag body 40, enabling an improvement to be achieved in the initial-stage passenger D restraint performance by the airbag body 40.

Moreover, the pair of rear tethers 54 are less extensible than the front-rear chambers 34, and so the airbag body 40 is pulled relatively obliquely rearward and downward by the pair of rear tethers 54 during restraint of the passenger D. This thereby enables the height direction position of the airbag body 40 with respect to the head H of the passenger D to be stabilized during restraint of the passenger. Namely, the airbag 32 is able to appropriately restrain the passenger D.

### Second Exemplary Embodiment

Next, description follows regarding an airbag device 30 according to a second exemplary embodiment. Note that the same reference numerals are appended to equivalent locations to those of the first exemplary embodiment, and detailed explanation thereof (including of common operation) will be omitted as appropriate.

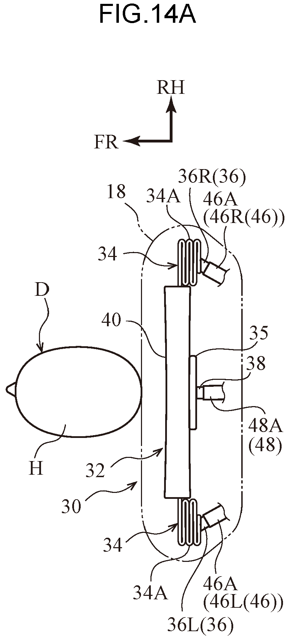

As illustrated in Fig. 14A to Fig. 14C, the second exemplary embodiment, differs from that of the first exemplary embodiment in that the push structure is not configured by a rear coupling section 34C that serves as a push chamber connecting together (coupling together) rear end portions of the pair of front-rear chambers 34 (the front-rear extension portions 34A) in the left-right direction, and instead is configured by a push chamber 35 that is a separate body from the pair of front-rear chambers 34. Namely, a cylindrical shaped basal portion 38 extending toward the rear side is integrally formed with a seat width direction central portion of a rear face of the push chamber 35, and an ejection port 48A of a branch pipe 48 is connected to this basal portion 38.

This means that as well as obtaining similar operation and advantageous effects to those of the first exemplary embodiment, the airbag body 40 in a state fold-packed in a roll shape is reliably pushed to the front side from an initial-stage position (installation position) by this push chamber 35. Moreover, in the second exemplary embodiment, due to the push chamber 35 being configured as a separate body from the pair of front-rear chambers 34, the configuration of the airbag 32 can be simplified. Namely, this push chamber 35 is also configuration of the airbag 32.

### Third Exemplary Embodiment

Next description follows regarding an airbag device 30 according to a third exemplary embodiment. Note that the same reference numerals are appended to equivalent locations to those of the first exemplary embodiment and the second exemplary embodiment, and detailed explanation thereof (including of common operation) will be omitted as appropriate.

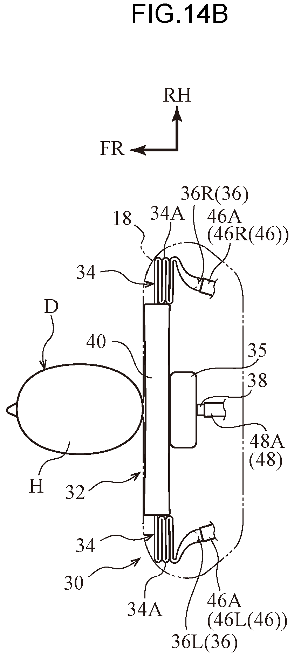

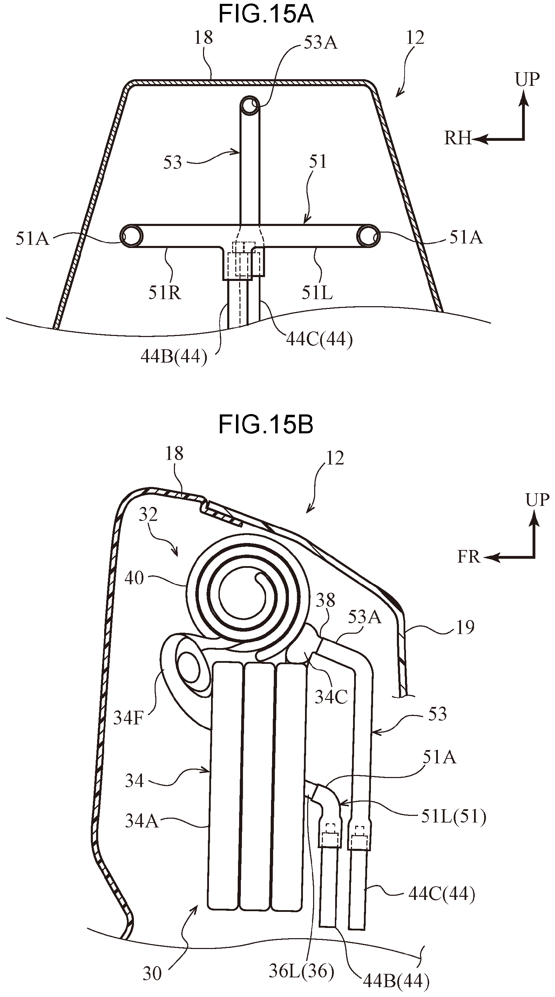

As illustrated in Fig. 15A and Fig. 15B, the third exemplary embodiment differs from the first exemplary embodiment and the second exemplary embodiment in that the inflator 44 is provided as two inflators, a first inflator 44B that supplies gas to the pair of front-rear chambers 34, and a second inflator 44C that supplies gas to the rear coupling section 34C (or to the push chamber 35 illustrated in Fig. 14A and Fig. 14B), and in that a vehicle seat 12 is provided with a first distribution piping 51 configured to supply gas ejected from the first inflator 44B to the pair of front-rear chambers 34, and a second distribution piping 53 configured to supply gas ejected from the second inflator 44C to the rear coupling section 34C (or to the push chamber 35).

The first distribution piping 51 is formed substantially in a T shape when viewed from the front, and includes a cylindrical shaped branch pipe 51L branched from a seat width direction central portion toward the left, and a cylindrical shaped branch pipe 51R branched from a seat width direction central portion toward the right. Ejection ports 51A of the left and right branch pipes 51L, 51R are connected to respective basal portions 36L, 36R of the pair of front-rear chambers 34. Note that an ejection port of the inflator 44B is connected to a cylindrical shaped base that extends to a lower side from a seat width direction central portion of the first distribution piping 51.

The second distribution piping 53 is disposed at a seat width direction central portion of the headrest 18, and extends toward the upper side from a position substantially the same as the seat width direction central portion of the first distribution piping 51 when viewed from the front. An ejection port 53A that is at an upper end portion of the second distribution piping 53 is connected to a basal portion 38 of the rear coupling section 34C (or of the push chamber 35). Note that an ejection port of the inflator 44C is connected to a cylindrical shaped base extending to a lower side from the seat width direction central portion of the second distribution piping 53, and the inflator 44C is disposed at a height position substantially the same as that of the inflator 44B.

Moreover, an inner diameter of each of the ejection ports 51A of the left and right branch pipes 51L, 51R of the first distribution piping 51 is larger than the inner diameter of the ejection port 53A of the second distribution piping 53. Due to this, similarly to in the first exemplary embodiment or the second exemplary embodiment, the supply quantity of gas supplied to the pair of front-rear chambers 34 can be increased to more than the supply quantity of gas supplied to the rear coupling section 34C (or the push chamber 35), enabling early completion of expansion and deployment of the airbag body 40 to be achieved.

Moreover, in the third exemplary embodiment the inflator 44 is configured by the two inflators, the first inflator 44B and the second inflator 44C, and so this enables the number of components and the installation space to be reduced compared to cases in which the inflator is provided by two inflators for the pair of front-rear chambers 34 and provided by one inflator for the rear coupling section 34C (or for the push chamber 35), thereby enabling a reduction in the manufacturing cost to be achieved.

### Fourth Exemplary Embodiment

Next, description follows regarding an airbag device 30 according to a fourth exemplary embodiment. Note that the same reference numerals are appended to equivalent locations to those of the first exemplary embodiment and the second exemplary embodiment, and detailed explanation thereof (including of common operation) will be omitted as appropriate.

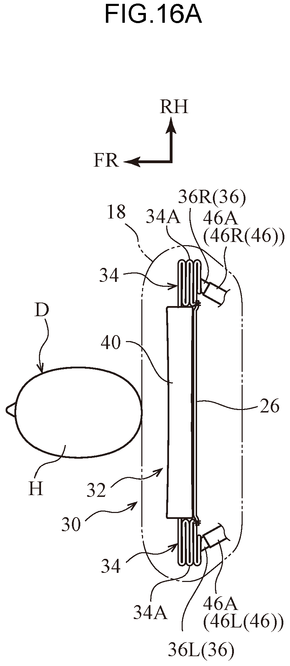

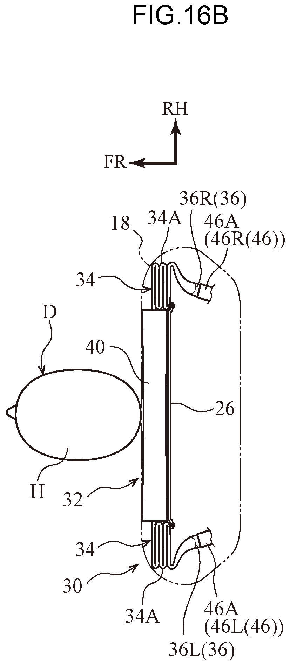

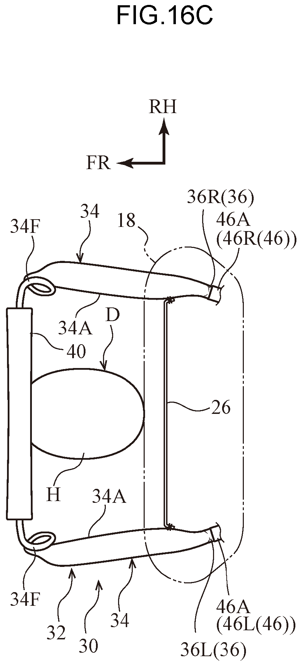

As illustrated in Fig. 16A to Fig. 16C, the fourth exemplary embodiment differs from the first exemplary embodiment and the second exemplary embodiment in that the push structure is not configured by the rear coupling section 34C, serving as a push chamber connecting together (coupling together) the rear end portions of the pair of front-rear chambers 34 (the front-rear extension portions 34A) in the left-right direction, not by the push chamber 35 as a separate body from the pair of front-rear chambers 34, and instead is configured by a push cloth 26 coupling the pair of front-rear chambers 34 together.

The push cloth 26 is formed in a rectangular shape having a long direction in the seat width direction in rear view, and is formed with substantially the same size as the rear coupling section 34C. The push cloth 26 is, for example, configured by a polyamide- or polyester-based fabric, with both seat width direction end portions thereof attached by sewing to specific positions at a rear side of the base cloths 34D (see Fig. 5B) at the seat width direction inside of the respective pair of front-rear chambers 34 (the front-rear extension portions 34A).

This means that when the pair of front-rear chambers 34 is expanded and deployed to the front side (more specifically toward the seat width direction outside and forward), a specific tension is imparted to the push cloth 26 in the seat width direction. This means that the airbag body 40 in a state fold-packed in a roll shape is reliably pushed by the push cloth 26 from the initial-stage position (installation position) to the front side. Moreover, in the fourth exemplary embodiment, compact housing is enabled due to the push structure being configured by the push cloth 26, and the airbag 32 is also able to be made lighter in weight.

Note that as described above, neither a rear coupling section 34C nor a push chamber 35 are provided in the fourth exemplary embodiment. This means that in the fourth exemplary embodiment there is no need for a branch pipe 48 in the distribution piping 50. Namely, the fourth exemplary embodiment is configured, for example, by providing the first distribution piping 51 illustrated in Fig. 15A and Fig. 15B alone.

### Fifth Exemplary Embodiment

Next, description follows regarding an airbag device 30 according to a fifth exemplary embodiment. Note that the same reference numerals are appended to equivalent locations to those of the first exemplary embodiment and the second exemplary embodiment, and detailed explanation thereof (including of common operation) will be omitted as appropriate.

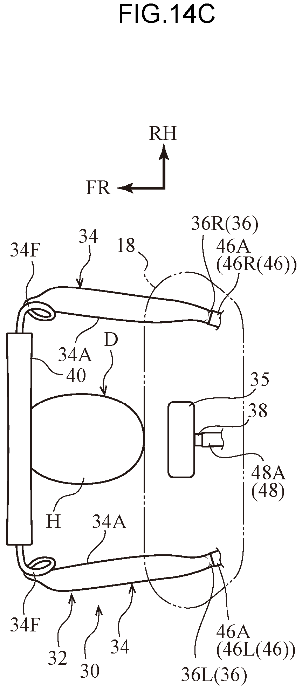

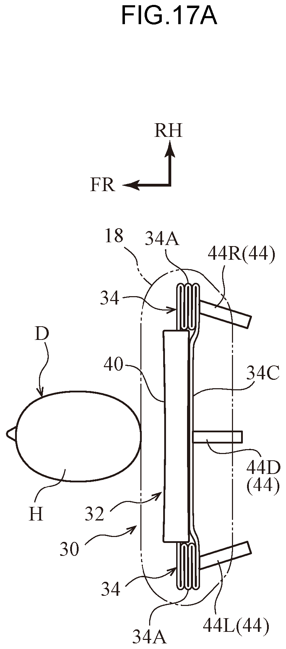

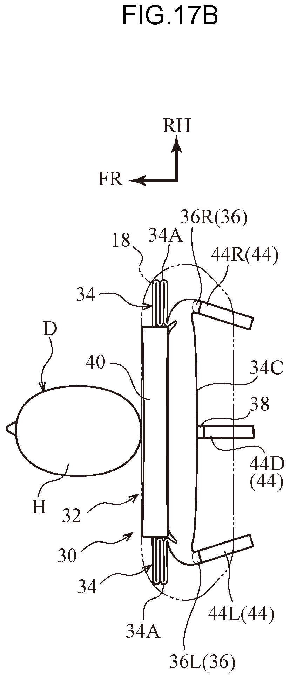

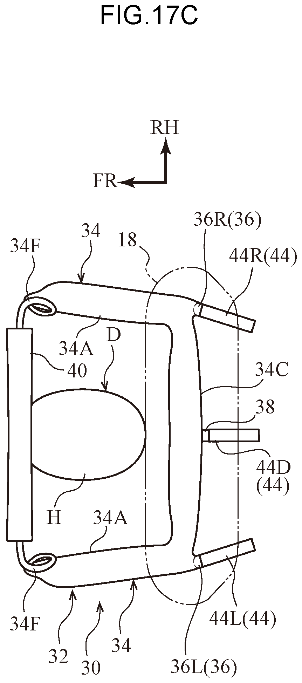

As illustrated in Fig. 17A to Fig. 17C, the fifth exemplary embodiment differs from the first exemplary embodiment and the second exemplary embodiment in that the inflator 44 is provided as three inflators configured to supply gas to each of the pair of front-rear chambers 34 and the rear coupling section 34C (or the push chamber 35 illustrated in Fig. 14). Namely, ejection ports of inflators 44L, 44R are directly connected to respective basal portions 36L, 36R of the pair of front-rear chambers 34, and an ejection port of an inflator 44D is directly connected to the basal portion 38 of the rear coupling section 34C (or the push chamber 35).

This means that in the fifth exemplary embodiment there is no need for distribution piping 50, and a configuration is adopted in which the three inflators 44L, 44R, 44D project in a direction (rearward and downward) that intersects with the extension direction of the seatback 16 in side view (not illustrated). Moreover, in the fifth exemplary embodiment, outputs of the two inflators 44L, 44R respectively supplying gas to the pair of front-rear chambers 34 are higher than output of the single inflator 44D supplying gas to the rear coupling section 34C (or the push chamber 35).

This means that in the fifth exemplary embodiment, the headrest 18 and the seatback 16 are more bulky (increased in thickness), however similarly to in the first exemplary embodiment to the third exemplary embodiment, the supply quantity of gas supplied to the pair of front-rear chambers 34 can be increased to more than the supply quantity of gas supplied to the rear coupling section 34C (or the push chamber 35), enabling early completion of expansion and deployment of the airbag body 40 to be achieved.

### Sixth Exemplary Embodiment

Next, description follows regarding an airbag device 30 according to a sixth exemplary embodiment. Note that the same reference numerals are appended to equivalent locations to those of the first exemplary embodiment, and detailed explanation thereof (including of common operation) will be omitted as appropriate.

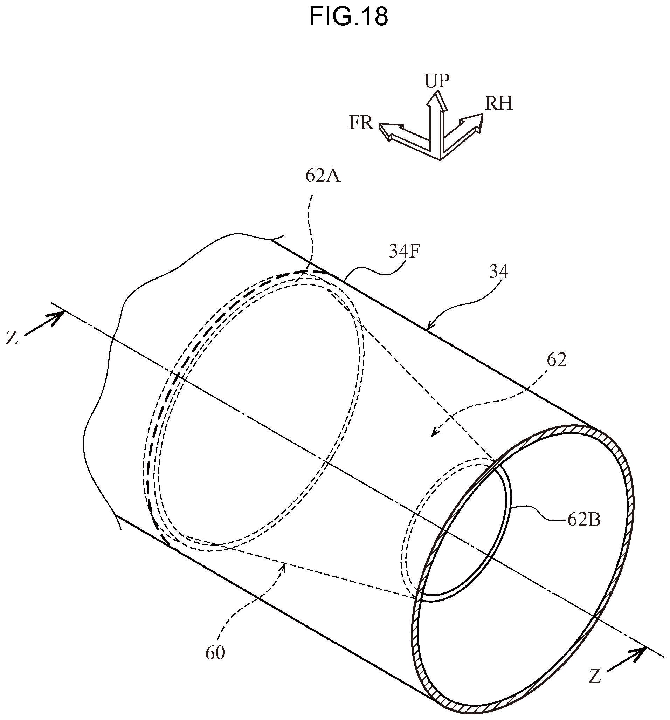

As illustrated in Fig. 18, the sixth exemplary embodiment differs from the first exemplary embodiment in that, instead of leading end portions 34F of the pair of front-rear chambers 34 being roll-packed one time, valve mechanisms 60 are provided at the leading end portions 34F to stop instantaneous inflow of gas. The valve mechanisms 60 each include a cylindrical shaped valve body 62 having an inner diameter that becomes gradually smaller, with the valve body 62, similarly to the base cloth of the airbag 32, configured from a polyamide- or polyester-based fabric, for example.

Each of the valve bodies 62 has a maximum inner diameter portion 62A attached by sewing to a peripheral face of the leading end portion 34F of the respective front-rear chambers 34 by being sewn around the entire periphery thereof. Each of the valve bodies 62 is disposed inside the respective front-rear chambers 34, with a minimum inner diameter portion 62B facing the upstream side in a gas inflow direction.

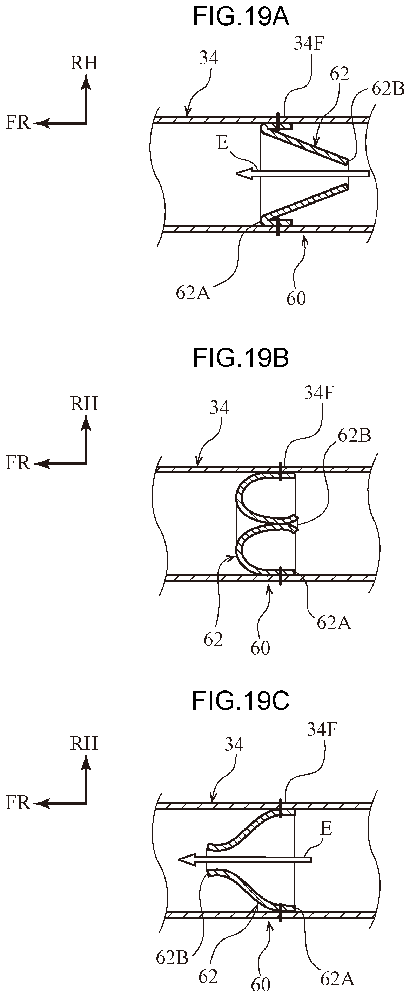

In the valve body 62 configured in this manner, when gas inflows in an arrow E direction, as illustrated in Fig. 19A, the minimum inner diameter portion 62B of the valve body 62 momentarily closes off the interior of the respective front-rear chamber 34 by flexing toward the center of the valve body 62, as illustrated in Fig. 19B.

Then when more gas has inflowed in the arrow E direction, as illustrated in Fig. 19C, the minimum inner diameter portion 62B of the valve bodies 62 passes through the inside of the maximum inner diameter portion 62A and inverts, so as to be disposed at the downstream side in the gas inflow direction. The interior of each of the front-rear chambers 34 is opened thereby, and gas is supplied from the leading end portion 34F of each of the front-rear chambers 34 to the airbag body 40 that is in a state fold-packed in a roll shape.

Thus in the sixth exemplary embodiment, the valve mechanisms 60 are provided at prevent instantaneous inflow of gas to the leading end portions 34F of the pair of front-rear chambers 34, enabling control such that gas does not inflow to the airbag body 40 until moved to the front side by passing between the head H of the passenger D and the ceiling 28 of the vehicle cabin. This means that the airbag body 40 can move reliably and early to the front side, enabling early completion of expansion and deployment of the airbag body 40 to be achieved effectively.

### Seventh Exemplary Embodiment

Finally, description follows regarding an airbag device 30 according to a seventh exemplary embodiment. Note that the same reference numerals are appended to equivalent locations to those of the first exemplary embodiment, and detailed explanation thereof (including of common operation) will be omitted as appropriate.

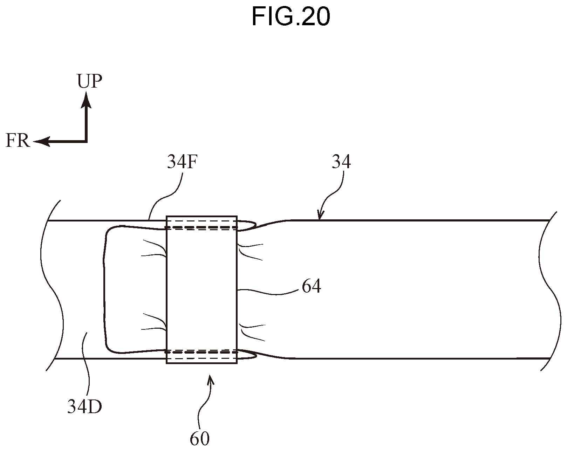

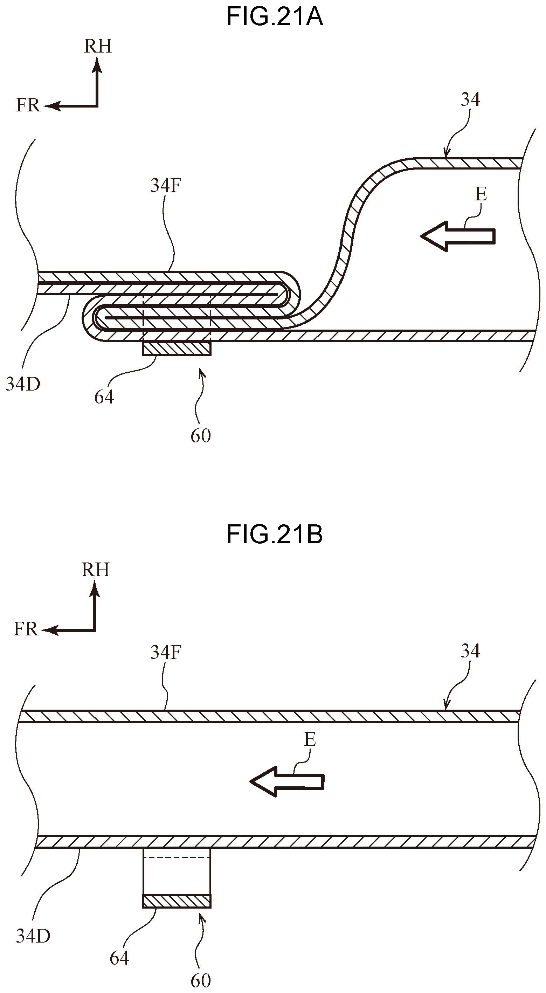

As illustrated in Fig. 20 and Fig. 21A, the seventh exemplary embodiment differs from the first exemplary embodiment in that, instead of the leading end portions 34F of the pair of front-rear chambers 34 being roll-packed one time, valve mechanisms 60 are provide to the leading end portions 34F to prevent instantaneous inflow of gas.

When the front-rear chambers 34 are formed by sewing upper and lower peripheral edge portions of two elongated base cloths together, the valve mechanisms 60 are configured by tape shaped temporary fixing members 64 in which only the upper and lower end portions are sewn and attached together with upper and lower peripheral edge portions of the valve mechanisms 60. The temporary fixing members 64 may also, similarly to the base cloth of the airbag 32, be configured from a polyamide- or polyester-based fabric, for example.

This temporary fixing member 64 enables the interior of each of the front-rear chambers 34 to be closed off momentarily, as illustrated in Fig. 21A, by part of the leading end portion 34F of each of the front-rear chambers 34, which are provided in a flattened shape, further to the gas inflow direction upstream side than the temporary fixing member 64 being inserted between the temporary fixing member 64, and the base cloths 34D facing the temporary fixing member 64 in the seat width direction.

Then when more gas has inflowed in the arrow E direction, the parts of each of the front-rear chambers 34 that were inserted between the temporary fixing members 64 and the base cloths 34D come away from being interposed therebetween, and the interior of each of the front-rear chambers 34 is opened as illustrated in Fig. 21B. Namely, gas is supplied from the leading end portions 34F of each of the front-rear chambers 34 to the airbag body 40 that is in a state fold-packed in a roll shape.

In the seventh exemplary embodiment, providing the valve mechanisms 60 to the leading end portions 34F of the pair of front-rear chambers 34 to prevent instantaneous inflow of gas enables control such that gas does not inflow to the airbag body 40 until moved to the front side by passing between the head H of the passenger D and the ceiling 28 of the vehicle cabin. This means that the airbag body 40 can move reliably and early to the front side, enabling early completion of expansion and deployment of the airbag body 40 to be achieved effectively.

Although the fold-packing method of the seat-mounted airbag device 30 and the airbag 32 according to the present exemplary embodiments has been described with reference to the drawings, the fold-packing method of the seat-mounted airbag device 30 and the airbag 32 according to the present exemplary embodiment is not limited to those illustrated, and appropriate design changes may be made within a range not departing from the spirit of the present disclosure. For example, the push structure is not limited to those illustrated.

Moreover, when fold-packing the airbag 32, fold-packing may be performed, for example, on a non-illustrated backing paper drawn with reference lines for reference in fold-packing. Moreover, the number of times of roll-packing and the number of times of concertina folding of the pair of front-rear chambers 34 are not particularly limited, as long as an early completion of expansion and deployment of the airbag body 40 is achieved. Moreover, when applied to a vehicle having a comparatively wide gap between the head H of the passenger D and the ceiling 28 of the vehicle cabin, the airbag body 40 may by fold-packed in a roll shape that is internally wound, i.e. the opposite to in the above exemplary embodiments.

However, roll-packing of the leading end portions 34F of the pair of front-rear chambers 34 is preferably roll-packing that is externally wound. This means that even if the airbag body 40 were to hit a rear upper side of the head H of the passenger D when moving in a state fold-packed in a roll shape to the front side in conjunction with expansion and deployment of the pair of front-rear chambers 34, the airbag body 40 in the state fold-packed in this roll shape is able to roll over the rear upper side of the head H of the passenger D while maintaining this state and move to the front side.

Moreover, the distribution piping 50, 51, 53 may be provided so as to straddle between the inside of the headrest 18 and the inside of the seatback 16. Although, for example, a mode has been illustrated in the first exemplary embodiment in which each of the illustrated basal portions 36, 38 is attached by being inserted inside the respective ejection port 46A, 48A, there is no limitation thereto, and a configuration may be adopted in which they are attached so as to cover the outside of the respective ejection ports 46A, 48A.

The entire content of the disclosure of Japanese Patent Application No. 2023-132161 filed on August 14, 2023 is incorporated by reference in the present specification. All publications, patent applications and technical standards mentioned in the present specification are incorporated by reference in the present specification to the same extent as if each individual publication, patent application, or technical standard was specifically and individually indicated to be incorporated by reference.

## Claims

1. A seat-mounted airbag device, comprising:
an inflator that is provided at a vehicle seat and that ejects gas during a vehicle collision; and
an airbag including:
a pair of front-rear chambers that by being supplied with gas ejected from the inflator are expanded and deployed to a seat front side by passing both left and right sides of a head of a passenger seated in the vehicle seat, and
an airbag body that moves to the seat front side by passing between the head of the passenger and a ceiling of a vehicle cabin in conjunction with expansion and deployment of the pair of front-rear chambers, and by being supplied with the gas from the pair of front-rear chambers, expands and deploys toward a seat rear side between the pair of front-rear chambers so as to be disposed at the seat front side of the passenger,
wherein the airbag includes a push structure that is provided at the seat rear side of the airbag body and that pushes the airbag body toward the seat front side.

2. The seat-mounted airbag device of claim 1, wherein the push structure is configured by a push chamber that couples the pair of front-rear chambers together.

3. The seat-mounted airbag device of claim 1, wherein the push structure is configured by a push chamber that is a separate body from the pair of front-rear chambers.

4. The seat-mounted airbag device of claim 1, wherein the push structure is configured by a push cloth that couples the pair of front-rear chambers together.

5. The seat-mounted airbag device of claim 2 or claim 3, wherein:
the inflator is provided as a single inflator, and distribution piping is provided at the vehicle seat to enable gas ejected from the inflator to be respectively supplied to the pair of front-rear chambers and the push chamber; and
an inner diameter of ejection ports of the distribution piping connected to basal portions of the pair of front-rear chambers is larger than an inner diameter of an ejection port of the distribution piping connected to a basal portion of the push chamber.

6. The seat-mounted airbag device of claim 5, wherein:
a headrest of the vehicle seat is integrally formed with a seatback of the vehicle seat; and
the inflator is disposed along an extension direction of the seatback.

7. The seat-mounted airbag device of claim 2 or claim 3, wherein:
the inflator is configured by two inflators comprising a first inflator that supplies gas to the pair of front-rear chambers and a second inflator that supplies gas to the push chamber;
the vehicle seat is provided with a first distribution piping configured to supply gas ejected from the first inflator to the pair of front-rear chambers, and a second distribution piping configured to supply gas ejected from the second inflator to the push chamber; and
an inner diameter of an ejection port of the first distribution piping connected to a basal portion of the pair of front-rear chambers is larger than an inner diameter of an ejection port of the second distribution piping connected to a basal portion of the push chamber.

8. The seat-mounted airbag device of claim 7, wherein:
the headrest of the vehicle seat is integrally formed with a seatback of the vehicle seat; and
the first inflator and the second inflator are arranged along an extension direction of the seatback.

9. The seat-mounted airbag device of claim 2 or claim 3, wherein:
the inflator is configured by three inflators that enable gas to be supplied to each of the pair of front-rear chambers and the push chamber; and
outputs of two of the three inflators respectively supplying gas to the pair of front-rear chambers are higher than an output of one of the three inflators supplying gas to the push chamber.

10. The seat-mounted airbag device of any one of claim 1 to claim 4, wherein a valve mechanism is provided at a leading end portion of each of the pair of front-rear chambers to prevent instantaneous inflow of the gas.

11. A fold-packing method for an airbag configured by a pair of front-rear chambers that, by being supplied with gas ejected from an inflator provided at a vehicle seat during a vehicle collision, are expanded and deployed to a seat front side by passing both left and right sides of a head of a passenger seated in the vehicle seat, and with an airbag body that moves to the seat front side by passing between the head of the passenger and a ceiling of a vehicle cabin in conjunction with expansion and deployment of the pair of front-rear chambers, and by being supplied with the gas from the pair of front-rear chambers, expands and deploys toward a seat rear side between the pair of front-rear chambers so as to be disposed at the seat front side of the passenger, the airbag fold-packing method comprising:
providing the airbag, which is configured from a base cloth, in a flattened shape; and
pulling a part of the base cloth toward an outer side of the airbag in a seat width direction.

12. The airbag fold-packing method of claim 11, wherein:
leading end portions of the pair of front-rear chambers are roll-packed a specific number of times from a seat front side toward a seat upper side; and
the pair of front-rear chambers are concertina-folded a plurality of times except for at the leading end portions.

13. The airbag fold-packing method of claim 12, wherein the number of times of roll-packing is one.

14. The airbag fold-packing method of claim 12 or claim 13, wherein the number of times of concertina-folding is three.

15. The airbag fold-packing method of claim 11, wherein pulling a part of the base cloth configuring the airbag to the outer side of the airbag in the seat width direction includes pulling the base cloth at both left and right side parts that have been tucked inside the airbag body to the outer side of the airbag body in the seat width direction.

16. The airbag fold-packing method of claim 11, wherein pulling a part of the base cloth configuring the airbag to the outer side of the airbag in the seat width direction includes pulling substantially central portions, in a height direction, of a base cloth at both left and right sides of the front-rear chambers to an outer side of the front-rear chambers in the seat width direction.
